# EUROPÄISCHE PATENTSCHRIFT

(11) **EP 4 094 461 B1**
(45) Veröffentlichungstag und Bekanntmachung des Hinweises auf die Patenterteilung: **03.09.2025**
(21) Anmeldenummer: 21700929.9
(22) Anmeldetag: 19.01.2021
(51) Int. Cl.: H04W 12/00, H04W 4/80

(54) **ÜBERWACHUNGSSYSTEM MIT AUSFALLSICHERUNG**
MONITORING SYSTEM HAVING FAILURE PROTECTION
SYSTÈME DE SURVEILLANCE À PROTECTION CONTRE LES PANNES

(30) Priorität: 24.01.2020 DE 102020101728
(43) Veröffentlichungstag der Anmeldung: 30.11.2022
(73) Patentinhaber: Bundesdruckerei GmbH, 10969 Berlin (DE)
(72) Erfinder: DRESSEL, Olaf, 14641 Wustermark (DE); SCHMIDT, Sandra, 10117 Berlin (DE); KUNAHT, Steffen, 10317 Berlin (DE); WINDISCH, Michael, 13509 Berlin (DE)
(74) Vertreter: Richardt Patentanwälte PartG mbB
(86) Internationale Anmeldenummer: PCT/EP2021/051007
(87) Internationale Veröffentlichungsnummer: WO 2021/148375

(56) Entgegenhaltungen:
- EP-A1- 3 471 068
- WO-A1-2013/166096
- WO-A1-2016/196722
- WO-A1-2020/014753
- US-A1- 2011 280 178

## Beschreibung

Die Erfindung betrifft ein UWB-Überwachungssystem sowie ein Verfahren zum Steuern eines UWB-Überwachungssystems.

Moderne Sensorik ermöglicht eine detaillierte, vielfältige und umfangreiche Überwachung, beispielsweise von räumlichen Bereichen. Insbesondere nimmt die Qualität und damit einhergehend der Umfang der Sensordaten, welche innerhalb entsprechender Überwachungssysteme erfassten werden und, beispielsweise zu Auswertungszwecken, zu übertragen sind. Mit dem Umfang und der Qualität der erfassten Sensordaten steigen auch die Anforderungen an die Übertragung, Verarbeitung und Sicherung der erfassten Daten.

WO 2020/014753 A1 beschreibt ein Verfahren und ein System zur Bewältigung eines Notfalls in Fällen, in denen eine Evakuierung in einem realen Szenario oder einem Training oder einer Übung erforderlich ist, das Maßnahmen zur Katastrophenbekämpfung und Fluchtwege aus Umgebungen steuert und optimiert, Notfallnachrichten und Ablaufpläne mit Anweisungen dynamisch aktualisiert, Bewegung und Bedingungen von Personen in ihren Arbeitsabläufen, vorhandene Schulungszertifikate, persönlichen Bewertungen von beobachteten Notfällen oder besuchten Schulungen, den Zustand und die Verfügbarkeit von Gruppenschutzausrüstungen, die Verfügbarkeit von Rettungsausrüstung, ob das Schiff stabil ist und die Wetterbedingungen berücksichtigt. Das System verwendet ein Steuer- und Überwachungsmodul, das mit einem Backup-Sicherheitsmodul, authentifizierten Computern und tragbaren Modulen oder Modulen, die in verschiedenen Umgebungen installiert sind, kommuniziert, um über die Notfallsituation, Wetterbedingungen, den Stabilitätsstatus des Schiffes und Schnittstellenmodule mit den Personen an Bord zu informieren und zur Durchführung von Scan-Suchen mit Kameras, um die Anwesenheit von Personen, Schutz- und Rettungsausrüstung sowie den Status von Fluchtwegen und -zonen zu erfassen.

EP 3 471 068 A1 beschreibt ein System zum Verwalten von personenbezogenen Daten. Das System weist eine erste Sicherheitseinrichtung auf und eine zweite Sicherheitseinrichtung auf. Die Sicherheitseinrichtungen sind räumlich getrennt angeordnet und jeweils dazu eingerichtet, personenbezogene Daten zu erfassen und die erfassten personenbezogenen Daten Identitäten zuzuordnen. Das System weist des Weiteren ein Verwaltungssystem auf, das dazu eingerichtet ist, Berechtigungen zu den Identitäten zu verwalten. Die erste Sicherheitseinrichtung und die zweite Sicherheitseinrichtung anonymisieren jeweils die erfassten personenbezogenen Daten und lassen einen Zugriff auf die personenbezogenen Daten zu, wenn eine Berechtigung zum Zugriff auf personenbezogene Daten vorliegt, die der Identität zugeordnet ist, die den personenbezogenen Daten zugeordnet ist.

Der Erfindung liegt die Aufgabe zugrunde, ein UWB-Überwachungssystem mit verbesserter Datenübertragung zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein UWB-Überwachungssystem zur Überwachung eines räumlichen Bereiches. Das UWB-Überwachungssystem umfasst eine Mehrzahl von UWB-Sensoren, welche in dem räumlichen Bereich verteilt angeordnet sind. Die UWB-Sensoren sind für ein Erfassen von Sensordaten konfiguriert. Die UWB-Sensoren sind ferner für eine kabellose UWB-Kommunikation konfiguriert.

Ein oder mehrere der UWB-Sensoren sind zur Übertragung erfasster Sensordaten an ein lokales kabelgebundenes Netzwerk mit einem zentralen oder abgesetzten Steuerungsserver zum Steuern des Betriebs des UWB-Überwachungssystems angeschlossen.

Ferner sind die UWB-Sensoren dazu konfiguriert, ein UWB-Mesh-Netzwerk mit einer vermaschten Netzwerktopologie als ein zu dem lokalen kabelgebundenen Netzwerk zumindest teilweise redundantes kabelloses Netzwerk bereitzustellen. Ein oder mehrere der UWB-Sensoren umfassen jeweils ein Steuermodul mit einer Notfunktion. Die Notfunktion umfasst Steuerungsfunktionen zumindest zum lokalen Betrieb eines Teils des UWB-Überwachungssystems unter Verwendung des UWB-Mesh-Netzwerks.

Das UWB-Überwachungssystem ist dazu konfiguriert, auf einen Ausfall des lokalen kabelgebundenen Netzwerks hin, die Notfunktion der UWB-Sensoren zum lokalen Betrieb des UWB-Überwachungssystems unter Verwendung des UWB-Mesh-Netzwerks zu aktivieren und erfasste Sensordaten mittels UWB über das UWB-Mesh-Netzwerk zu übertragen.

Ausführungsformen können den Vorteil haben, dass ein Steuern des Betriebs des UWB-Überwachungssystems mit einem zentralen oder abgesetzten Steuerungsserver unter Verwendung eines lokalen kabelgebundenen Netzwerks zur Übertragung erfasster Sensordaten und/oder unter Verwendung der erfassten Sensordaten erstellten Daten erfolgen kann. Über das lokale kabelgebundene Netzwerk können zudem Steuerungsbefehle von dem zentralen oder abgesetzten Steuerungsserver an die UWB-Sensoren gesendet werden. Ein kabelgebundenes Netzwerk hat den Vorteil, dass physisch effizient gegen Manipulations- und/oder Abhörversuche geschützt werden kann. Im Allgemeinen ist für Manipulations- und/oder Abhörversuche ein physischer Zugriff auf die entsprechenden Kabel notwendig. Befindet sich das kabelgebundene Netzwerk und insbesondere die entsprechenden Kabel innerhalb des mit dem Überwachungssystem überwachten räumlichen Bereich, können entsprechende Manipulations- und/oder Abhörversuche detektiert und ggf. unterbunden werden, bevor diese erfolgreich abgeschlossen und das Überwachungssystem beeinträchtigt werden können. Zudem können über entsprechend konfigurierte Kabel großer Datenmengen in kurzer Zeit übertragen werden.

Allerdings sind kabelgebundene Netzwerke anfällig gegenüber Unterbrechungen aufgrund von beschädigten Kabeln. Kommt es beispielsweise aufgrund von Beschädigungen der Infrastruktur, etwa in Folge eines Brands, einer Explosion, Kollision oder eines Erdbebens, zu einer Unterbrechung von Kabelverbindungen droht ein Ausfall des Überwachungssystems. Insbesondere kann die Fähigkeit des zentralen oder abgesetzten Steuerungsservers zur Steuerung des Überwachungssystems signifikant beeinträchtig oder gar völlig blockiert werden. Kabelgebundene Netzwerke sind dabei auf die verlegten Kabel angewiesen, d.h. blockierte Netzwerkabschnitte können nur über existente Kabelverbindungen umgangen werden. Es können keine zusätzlichen Verbindungen spontan implementiert werden.

Ein kabelloses UWB-Mesh-Netzwerk mit einer vermaschten Netzwerktopologie erlaubt demgegenüber die Kommunikation bei Unterbrechungen auf alternative Übertragungswege mittels Funkverbindungen auszuweichen. Hierbei bietet UWB ein bereits an sich sicheres und leistungsfähiges Übertragungsverfahren. Sind zudem einzelne der Steuermodule dazu konfiguriert zumindest teilweise Steuerfunktionen des zentralen oder abgesetzten Steuerungsservers zu ersetzten, so ist im Extremfall selbst ein autarker, insularer Betrieb einzelner Teile des UWB-Überwachungssystems in einzelnen Teilabschnitten des räumlichen Bereiches möglich.

Unter Verwendung des UWB-Mesh-Netzwerks kann ein übergeordnetes, System zur Wahrnehmung administrativer und/oder sicherheitskritischer Rechte in Infrastrukturen implementiert werden. Mittels der UWB-Sensoren mit Steuermodulen, welche beispielsweise als UWB-Antennen und/oder UWB-Access-Points fungieren, können Notfunktionen aufrechterhalten werden. Diese Notfunktionen können eine Lokalisierung von UWB-Token innerhalb von Teilen des UWB-Mesh-Netzwerks, etwa Zellen und/oder Zellverbunde, oder innerhalb des gesamten des UWB-Mesh-Netzwerks ermöglichen. Ferner können Daten, insbesondere erfasste Sensordaten, übertragen werden. Ferner ist so ein Austausch von kryptographischen Schlüsseln möglich.

Die UWB-Sensoren sind nicht nur durch das LAN in ein Netzwerk eingebunden bzw. an ein Netzwerk angeschlossen, sondern überdies mittels des UWB-Netzwerks miteinander verbunden. Kommerziell verfügbare System nutzen beispielsweise zentrale Steuerungsserver Server zur Synchronisation und/oder Datenabgleich. Brechen die Kommunikationswege zu den entsprechenden zentralen oder abgesetzten Steuerungsservern zusammen, ist das System ist das System in der Regel nicht mehr verwendbar. Durch eine Verwendung von Steuermodulen, welche über das UWB-Mesh-Netzwerk verteilt sind und lokal die Funktionen eines Steuerungsservers bereitstellen können, wie etwa eine Synchronisation und/oder einen Datenabgleich, kann der Betrieb des Systems zu mindestens innerhalb der durch die Steuermodule gesteuerten Abschnitten des UWB-Mesh-Netzwerks aufrechterhalten werden.

Durch ein Auslagern, z.B. Spiegeln, von zellenspezifischen Funktionen, wie etwa ein Bekanntgeben der in der Zelle angemeldeten UWB-Token, aus dem zentralen oder abgesetzten Steuerungsserver in das Steuerungsmodule der entsprechenden Zelle, kann beispielsweise eine Zelle, wie etwa ein Mesh aus 4 UWB-Sensoren, weiterhin synchron, lokal betrieben werden, selbst bei einem Ausfall der Verbindung zu dem zentralen oder abgesetzten Steuerungsserver und/oder einem Ausfall des entsprechenden zentralen oder abgesetzten Steuerungsserver selbst. Ein entsprechendes Auslagern kann beispielsweise permanent erfolgen, wobei die aus den ausgelagerten Funktionen resultierenden Daten, beispielsweise in regelmäßigen Abständen an den zentralen oder abgesetzten Steuerungsserver gesendet werden. Ein entsprechendes Auslagern kann beispielsweise auf einen Ausfall des lokalen kabelgebundenen Netzwerks hin erfolgen. Hierzu aus den auszulagernden Funktionen resultierende Daten, beispielsweise in regelmäßigen Abständen die lokalen Steuermodule gesendet werden. Kommt es zu einem Ausfall, liegen die entsprechenden Daten vor und lokale Steuermodule können die auszulagernden Funktionen auf dieser Basis verlustfrei fortführen.

Innerhalb einer entsprechenden Zelle können die in dieser Zelle angemeldete UWB-Token bzw. deren Überwachung daher in Betrieb bleiben, da die entsprechende Funktion des zentralen oder abgesetzten Steuerungsservers durch das Steuermodul, welches beispielsweise den Verbund bzw. die Zelle aus den vier UWB-Sensoren steuert, weiter gewährleistet werden kann. In gleicher Weise können auch Verbunde mehrerer Zellen gebildet werden, da der Datenaustauch, z.B. Sensordaten oder kryptographische Schlüssel, auch ohne den zentralen oder abgesetzten Steuerungsserver gewährleistet werden kann. Ein UWB-Token kann sich daher in diesem Verband bewegen, ohne dass beispielsweise erteilte Rechte oder Freigaben erlöschen. Eine Überwachung des UWB-Tokens kann mithin aufrechterhalten werden. Insbesondere bei Auftreten eines Notfalls kann es sich, etwa für Bergungs- und/oder Rettungsmaßnahmen, als vorteilhaft erweisen zu wissen, wo sich einzelne UWB-Token und mithin deren Nutzer aufhalten. Ferner kann selbst bei einem Auftreten eines Notfalls sichergestellt werden, dass es zu keinen Manipulationsversuchen und/oder sonst welchen unzulässigen Aktionen innerhalb des überwachten räumlichen Bereiches kommt.

Nach Ausführungsformen wird bei einem Ausfall des lokalen kabelgebundenen Netzwerks durch das UWB-Mesh-Netzwerk nur der ausgefallene Teil des lokalen kabelgebundenen Netzwerks ersetzt. Mit anderen Worten wird beispielsweise nur ein Teil des UWB-Mesh-Netzwerks aktiviert, welcher zum Ersetzen des ausgefallenen Teils des lokalen kabelgebundenen Netzwerks notwendig ist. Nach Ausführungsformen wird bei einem Ausfall des lokalen kabelgebundenen Netzwerks das gesamte UWB-Mesh-Netzwerk aktiviert, sodass gegebenenfalls auch mehr als nur der ausgefallene Teil des lokalen kabelgebundenen Netzwerks ersetzt werden kann. Beispielsweise wird das lokale kabelgebundene Netzwerk auf einen teilweisen Ausfall hin deaktiviert. Beispielsweise erfolgt ein solches Deaktivieren, falls der Ausfall einen vordefinierten Prozentsatz des lokalen kabelgebundenen Netzwerks betrifft oder vordefinierte Netzwerknoten/Verbindungen des lokalen kabelgebundenen Netzwerks umfasst.

In einem vermaschten (englisch "mesh") Netzwerk ist jeder Netzwerkknoten mit einem oder mehreren anderen verbunden. Die Informationen werden von Knoten zu Knoten weitergereicht, bis sie das Ziel erreichen. Die einem Netzwerk zugrundeliegende Struktur lässt sich mathematisch als Graph beschreiben. Ein Netzwerk verfügt ferner über Mechanismen zur Organisation der zugrundeliegenden Struktur. Ein Graph besteht aus einer Menge von Elementen, sog. Knoten, die mittels Verbindungen, sog. Kanten, miteinander verbunden sind. Ein geschlossener Zug aus Kanten und Knoten bildet eine Masche. Vermaschte Netzwerke können den Vorteil haben, dass sie selbstheilend und dadurch sehr zuverlässig sind. Falls einer der Netzwerknoten oder eine Verbindung zwischen Netzwerkknoten blockiert ist oder ausfällt, kann sich das Netzwerk um die Blockade bzw. den Teil herum neu organisieren und diese umgehen. Daten können dadurch umgeleitet werden und das Netzwerk bleibt betriebsfähig.

Ein vermaschtes Netzwerk kann somit die Vorteile haben, dass es sich um ein sicheres Netzwerk handelt, welches bei Ausfall eines Netzwerkknoten oder einer Verbindung eine Datenkommunikation durch Umleiten aufrecht zu erhalten vermag, welches sehr leistungsfähig ist, eine vorteilhafte Lastverteilung zu bereitstellt und keine zentrale Verwaltung benötigt.

Ausführungsformen können den Vorteil haben, dass erfassten Sensordaten bei einem Ausfall des lokalen kabelgebundenen Netzwerks weiterhin effektiv über das UWB-Überwachungssystem übertragen werden können. Ferner bietet eine Mesh-Topologie eine hohe Ausfallsicherheit, da bei einem Ausfall einzelner Komponenten der Mesh-Topologie weiterhin eine Datenübertragung über alternative Routen möglich ist. Zudem kann bei einem Ausfall eines Teilbereiches der Mesh-Topologie ein Betrieb mit dem verbleibenden Teil der Mesh-Topologie aufrechterhalten werden.

Nach Ausführungsformen können den Vorteil haben, dass in dem auf UWB basierenden Funknetzwerk mit einer Mesh-Topologie Positionsdaten für mehrere und/oder alle Netzwerknoten, d.h. UWB-Sensoren und/oder UWB-Token breitgestellt werden bzw. bestimmt werden können. Eine Bestimmung von Positionsdaten kann beispielsweise unter Verwendung eines auf Laufzeitmessungen von UWB-Signalen basierenden Triangulationsverfahrens erfolgen. Bei den Positionsdaten kann es sich um relative und/oder absolute Positionsdaten handeln. Zum bestimmen absoluter Positionsdaten müssen Positionsdaten zumindest ein oder mehrere stationärer Referenzpunkte bekannt sein. Ausführungsformen können den Vorteil haben, dass für eine zielgerichtete Weiterleitung von Daten in dem UWB-basierten Funknetzwerk mit Mesh-Topologie ein positionsbasiertes Routingverfahren genutzt werden kann, um unter Verwendung der mittels UWB bestimmten Positionsdaten jeweils einen kürzesten oder anderweitig besten Pfad zwischen einem Quellknoten und einem Zielknoten innerhalb des Funknetzwerks zu bestimmen.

Nach Ausführungsformen ist der räumliche Bereich beispielsweise ein zugangsbeschränkter räumlicher Bereich, etwa ein zugangsbeschränkten Sicherheitsbereich. Der zugangsbeschränkte räumliche Bereich ist beispielsweise gegenüber der Umgebung abgegrenzt und bestimmungsgemäß nur über ein oder mehrere Ein- bzw. Ausgänge betretbar. Beispielsweise handelt es sich bei dem zugangsbeschränkten räumlichen Bereich um einen Indoor-Bereich bzw. Innenbereich.

UWB ("Ultra Wideband") bezeichnet eine drahtlose Übertragung elektromagnetischer impulsförmiger Signale über eine Mehrzahl paralleler Funkkanäle mit kleiner Sendeleistungen, z.B. bis maximal 1 mW. Hierbei werden beispielsweise Frequenzbereiche mit einer Bandbreite von mindestens 500 MHz und/oder von mindestens 20 % des arithmetischen Mittelwertes von unterer und oberer Grenzfrequenz des genutzten Frequenzbandes verwendet.

UWB basiert auf einer Erzeugung von Impulsen mit einer möglichst kurzen Pulsdauer, weshalb das über UWB-Antenne abgestrahlt bzw. empfangen Spektrum entsprechend den Gesetzen der Fourier-Transformation umso größer bzw. breiter ist, je kürzer die Pulsdauer ist.

Dabei ist das Produkt aus zeitlicher und spektraler Breite des Impulses konstant. Die gesamte Sendeleistung von wenigen Milliwatt oder weniger wird auf einen so großen Frequenzbereich verteilt, dass für den Funkbetrieb schmalbandiger Übertragungsverfahren keine Störungen zu erwarten sind. Mithin ist es nicht oder nur schwer erkennbar, dass überhaupt eine Übertragung mit UWB stattfindet. Für einen schmalbandigen Empfänger erscheint ein UWB-Signal vielmehr wie ein Rauschen. Mithin wird eine kaum ortbare Kommunikation ermöglicht, welche im gleichen Frequenzbereich wie herkömmliche Übertragungsverfahren eingesetzt werden kann.

UWB verwendet keine feste Trägerfrequenz, welche moduliert wird. Eine Datenübertragung erfolgt vielmehr beispielsweise basierend auf einer Pulsphasenmodulation bzw. Pulspositionsmodulation ("Pulse-Position Modulation"/PPM) unter Verwendung einer Mehrzahl von Einzelimpulsen. Weitere Möglichkeit zur Datenübertragung mittels UWB bietet eine Modulation von Polarität und/oder Amplitude der Impulse. Falls sich die Zeitpunkte der Einzelimpulse ausreichend unterscheiden, können mehrere UWB-Übertragungskanäle im gleichen Raumgebiet ohne gegenseitige Störung betrieben werden.

Mit zunehmender Bandbreite steigt die Übertragungskapazität, womit UWB-Systeme beispielsweise Nutzbitraten bis hin zum GBit/s-Bereich bereitstellen können. Reichweiten von UWB-Übertragungen können beispielsweise im Bereich von einigen wenigen Metern bis hin zu hundert Metern liegen.

Die UWB-Technologie ermöglicht zudem ein Implementieren eines Radarverfahrens unter Verwendung von UWB-Radarsensoren. Dabei wird, wie bei der UWB-Datenübertragung, ein elektromagnetisches Wechselfeld großer Bandbreite generiert, dessen Feldstärken klein sind. Je nach Beschaffenheit von Objekten im Ausbreitungsbereich des elektromagnetischen Wechselfeldes, wird dies das Wechselfeld deformieren. Das resultierende Feld kann von einem UWB-Sensor erfasst werden. Bei Kenntnis sowohl des Ausgangsfeldes als auch das resultierenden Feldes kennt, kann auf die Ursache der erfassten Deformation und mithin auf die Art und Geometrie des oder der Objekte im Ausbreitungsbereich des elektromagnetischen Wechselfeldes geschlossen werden.

UWB-Radarsensoren arbeiten beispielsweise auf Frequenzen zwischen 30 MHz und 12,4 GHz. Je nach Anwendung können beispielsweise Auflösungen von Zentimetern bis hin zu einigen Millimetern bei Arbeitsbandbreiten von 5 GHz erreicht werden.

Bei einem Radarverfahren werden kurze Impulse ausgesandt und mit den von dem oder den Objekten reflektierten Impulsverläufen verglichen. Damit lassen sich geometrische Größen wie beispielsweise Abstand, Dicke, Länge, Position, Körperform, Bewegung und/oder Geschwindigkeit bestimmen. Auch können Gegenstände durch Kleidung und Wände hindurch, detektiert werden. Hierbei werden die Eigenschaften des Ausbreitungsmediums für die elektromagnetischen Felder als bekannt vorausgesetzt.

UWB kann ein Tracking von mobilen Geräten verhindern, da über UWB kommunizierende Geräte, wie etwa UWB-Token, ohne Kenntnis der verwendeten UWB-Kodierung nicht lokalisierbar sind. Ferner stellt die verhältnismäßig kurze Reichweite von UWB sicher, dass ein Tracking und/oder Abhören aus der Ferne effektiv unterbunden werden kann. Zudem bietet die UWB-Kodierung eine eigenständige, instantane Verschlüsselung der übertragenen Daten, welche damit gegen ein Abhören abgesichert werden. Darüber hinaus weist UWB aufgrund des breiten Frequenzbandes eine hohe Resistenz gegenüber Störsignalen ("Jamming") auf. Aufgrund dieser speziellen, für Sicherheitsapplikationen vorteilhafter technischer Eigenschaften, kann unter Verwendung von UWB ein Überwachungssystem implementiert werden, welches einen hohen Schutz der Prozesse als auch der darin befindlichen bzw. verwendeten Sensordaten, insbesondere aber auch im Zusammenhang mit personenbezogenen Sensordaten von Beteiligten, gewährleisten kann. Insbesondere kann eine hohe Sicherheit der Datenübertragung mittels UWB sichergestellt werden.

Da die UWB-Technik auch höhere Datenraten zulässt, kann es insbesondere vorteilhaft für eine Übertragung von Sensordaten in Form von Videodaten, Tondaten und oder anderen umfangreichen sensorischen Messwerten sein.

Unter einem UWB-Sensor wird ein Sensor oder Anker verstanden, welcher zum Übertragen von erfassten Daten, z.B. Sensordaten, mittels UWB konfiguriert ist. Ferner kann ein UWB-Sensor, wie beispielsweise ein UWB-Radarsensor oder ein UWB-Lokalisierungssensor, dazu konfiguriert Sensordaten mittels UWB zu erfassen. Alternative kann ein UWB-Sensor dazu konfiguriert die Sensordaten mittels eines UWB-unabhängigen Verfahrens, etwa einem optischen, akustischen, chemischen, thermischen, elektromagnetischen und/oder vibrationsbasierten Verfahren. Nach Ausführungsformen können ein oder mehrere der UWB-Sensoren zusätzlich zum Übertragen von erfassten Daten mittels UWB zum Übertragen von erfassten Daten mittels einer kabelgebundenen Datenverbindung konfiguriert sein.

Unter Sensordaten werden mittels eines der UWB-Sensoren erfasste Daten verstanden, d.h. beispielsweise optische, akustische, chemische, thermische, elektromagnetische und/oder vibrationsbasierte Daten. Die Sensordaten werden von den erfassenden UWB-Sensoren innerhalb des UWB-Überwachungssystems mittels UWB übertragen. Nach Ausführungsformen können ein oder mehrere der UWB-Sensoren zusätzlich zum Übertragen von erfassten Daten mittels einer kabelgebundenen Datenverbindung konfiguriert sein. Bei den Sensordaten kann es sich ferner um Daten handeln, welche von den UWB-Sensoren mittels UWB erfasst wurden. Beispielsweise handelt es sich bei den Sensordaten um Sensordaten eines UWB-Radarsensors oder eines UWB-Lokalisierungssensors.

Nach Ausführungsformen sind die Steuermodule jeweils dazu konfiguriert, unter Verwendung der Steuerfunktionen des Steuermoduls den lokalen Betrieb des UWB-Überwachungssystems innerhalb einer eigenständigen Zelle des UWB-Mesh-Netzwerks aufrecht zu erhalten. Die jeweilige Zelle umfasst den UWB-Sensoren mit dem entsprechenden Steuermodul und ein oder mehrere weitere UWB-Sensoren der Mehrzahl von UWB-Sensoren ohne Steuermodule. Ausführungsformen können den Vorteil haben, dass der Betrieb des UWB-Überwachungssystems zumindest innerhalb einzelner Zellen aufrechterhalten werden kann. Dies kann in einer insularen Ausgestaltung des UWB-Überwachungssystems mit einer Mehrzahl autarker Zellen resultieren. Nach Ausführungsformen können die entsprechenden Zellen auch zu Zellverbunden zusammengefasst werden.

Nach Ausführungsformen sind die Steuermodule unter Verwendung der Steuerungsfunktionen ferner jeweils zum Auswerten von Sensordaten konfiguriert, welche durch ein oder mehrere UWB-Sensoren der Zelle erfasst werden, welche den UWB-Sensor mit dem entsprechenden Steuermodul umfasst. Ausführungsformen können den Vorteil haben, dass das UWB-Überwachungssystem innerhalb der entsprechenden Zelle unabhängig von dem zentralen oder abgesetzten Steuerungsserver betrieben werden kann.

Nach Ausführungsformen sind die Steuermodule unter Verwendung der Steuerungsfunktionen ferner jeweils zu einem Datenaustausch mit ein oder mehr benachbarten Zellen konfiguriert. Nach Ausführungsformen umfasst das UWB-Mesh-Netzwerks ein oder mehrere Zellverbünde, welche jeweils eine Mehrzahl von Zellen umfassen. Ausführungsformen können den Vorteil haben, dass durch den Datenaustausch und das Bilden von Zellverbunden aus den einzelnen Zellen ein UWB-Mesh-Netzwerk aufgebaut werden kann, welches das lokale kabelgebundene Netzwerk bei einem Ausfall in beliebigem Umfang zu ersetzen vermag. Durch den Datenaustausch zwischen benachbarten Zellen können zudem Beschränkungen der Reichweite von UWB-Signalen überwunden werden.

Nach Ausführungsformen sind ein oder mehrere Steuermodule unter Verwendung der Steuerungsfunktionen ferner zum Auswerten von Sensordaten konfiguriert, welche durch ein oder mehrere UWB-Sensoren verschiedener Zellen des Zellverbunds erfasst werden, welcher den UWB-Sensor mit dem entsprechenden Steuermodul umfasst. Ausführungsformen können den Vorteil haben, dass ein Ersetzen des lokalen kabelgebundenen Netzwerks in beliebigem Umfang unabhängig davon möglich ist, ob eine Verbindung zu dem zentralen oder abgesetzten Steuerungsserver vorhanden ist. Fällt die Verbindung zu dem zentralen oder abgesetzten Steuerungsserver und/oder der zentrale Steuerungsserver aus, kann das UWB-Überwachungssystem durch den Datenaustausch und das Bilden von Zellverbunden dennoch in beliebigem Umfang aufrechterhalten werden.

Nach Ausführungsformen sind die Steuermodule unter Verwendung der Steuerungsfunktionen ferner zu einem globalen Betrieb des gesamten UWB-Überwachungssystems unter Verwendung des UWB-Mesh-Netzwerks konfiguriert. Ausführungsformen können den Vorteil haben, dass der Betrieb des gesamten UWB-Überwachungssystems aufrechterhalten werden kann.

Nach Ausführungsformen ist das von den UWB-Sensoren bereitgestellte UWB-Mesh-Netzwerk ein zu dem gesamten lokalen kabelgebundenen Netzwerk redundantes kabelloses Netzwerk. Ausführungsformen können den Vorteil haben, dass das nicht nur Teile, sondern vielmehr das gesamte lokale kabelgebundene Netzwerk durch das UWB-Mesh-Netzwerk abgesichert werden kann. Somit kann insbesondere für räumliche Bereiche, bei welchen es sich um sicherheitskritische Bereiche handelt eine effektive Absicherung durch ein zuverlässiges und robustes redundantes System bereitgestellt werden. Bei dieser Redundanz handelt es sich beispielsweise um eine echte physische Redundanz und nicht nur um eine virtuelle Redundanz, bei welcher Verbindungen logisch voneinander isoliert werden. Nach Ausführungsformen erstreckt sich die Redundanz auf die Steuerung des Netzwerks, wobei die Steuermodule beispielsweise ein verteiltes Steuerungssystem bereitstellen, welches redundant zu dem zentralen oder abgesetzten Steuerungsserver ist. Fallen Verbindungen des lokalen kabelgebundenen Netzwerks und/oder der zentrale Steuerungsserver aus, lassen sich bei einem kabelgebundenen Netzwerk zumeist keine weiteren Maßnahmen mehr wie das Umkonfigurieren oder Sperren von Ports durchführen. Somit ist es schwierig entsprechende Ausfälle zu kompensieren. Ein redundantes UWB-Mesh-Netzwerk erlaubt es über die UWB-Funkverbindungen ein sogenanntes Meshing auszuführen, durch welches ein Weiterleiten von Informationen über einen separaten UWB-Kanal ermöglicht wird. Die Daten können somit verschiedene Wege nehmen und beispielsweise ausgefallenen Verbindungen dynamisch umgehen. Dadurch kann eine Technologie zur Datenübertragung hochverfügbar ausgeführt werden.

Nach Ausführungsformen eignet sich ein solche UWB-Mesh-Netzwerk, beispielweise in einer Gebäudestruktur, für Sicherheits- und Brandschutzanwendungen, da dieses sowohl eine Backup-Funktion für das lokales kabelgebundenes Netzwerk bereitstellt und es darüber hinaus auch ein Sensornetzwerk bereitstellt, mittels dessen im Sicherheitsfall und/oder Brandfall die aktuelle Situation innerhalb des überwachten räumlichen Bereiches, beispielsweise einer Gebäudestruktur, erfasst werden kann.

Nach Ausführungsformen sind ein oder mehrere der Steuermodule dazu konfiguriert, den zentralen oder abgesetzten Steuerungsserver zu ersetzen. Ausführungsformen können den Vorteil haben, kann somit auch eine Redundanz für den zentralen oder abgesetzten Steuerungsserver bereitgestellt werden. Dies Redundanz kann in zentralisierter Form durch ein einziges Steuermodul oder in Form eines verteilten Systems durch eine Mehrzahl von Steuermodulen implementiert werden.

Nach Ausführungsformen umfassen zumindest die Steuermodule ortsgebundenen Informationen zur bevorzugten Transportrichtung von Daten durch das Mesh Netzwerk aufgrund vorhandener Richtungsvektoren und/oder Positionsdaten. Ausführungsformen können den Vorteil haben, dass die Steuermodule anhand der ortsgebundenen Informationen zur bevorzugten Transportrichtung eine Übertragung der Daten innerhalb des UWB-Mesh-Netzwerks steuern können. Hierzu besitzen die Steuermodule Zugriff auf Richtungsvektoren und/oder Positionsdaten, anhand derer die bevorzugten Transportrichtung ermittelt werden können. Die bevorzugten Transportrichtung kann beispielsweise von der Anzahl der zu durchlaufenden Netzwerkkoten, Zellen und/oder der Auslastung der zu durchlaufenden Netzwerkkoten, Zellen abhängen.

Nach Ausführungsformen umfasst das UWB-Überwachungssystem zusätzlich zu den UWB-Sensoren ein oder mehrere UWB-Transceiver, welche zum Weiterleiten der UWB-Übertragungssignale innerhalb des UWB-Mesh-Netzwerks konfiguriert sind. Ausführungsformen können den Vorteil haben, dass unter Verwendung der UWB-Transceiver eine effiziente Datenübertragung durch das UWB-Mesh-Netzwerk sichergestellt werden kann. Insbesondere können Beschränkungen der Reichweite von UWB-Signalen so effektiv kompensiert werden. Nach Ausführungsformen sind ein oder mehrere der UWB-Sensoren als UWB-Transceiver zum Weiterleiten von UWB-Übertragungssignalen über das UWB-Mesh-Netzwerk an den zentralen oder abgesetzten Steuerungsserver konfiguriert.

Nach Ausführungsformen, umfassen die UWB-Transceiver ortsgebundenen Informationen zur bevorzugten Transportrichtung von Daten durch das Mesh Netzwerk aufgrund vorhandener Richtungsvektoren und/oder Positionsdaten. Ausführungsformen können den Vorteil haben, dass die UWB-Transceiver anhand der ortsgebundenen Informationen zur bevorzugten Transportrichtung eine Übertragung der Daten innerhalb des UWB-Mesh-Netzwerks steuern können. Hierzu besitzen die Steuermodule Zugriff auf Richtungsvektoren und/oder Positionsdaten, anhand derer die bevorzugten Transportrichtung ermittelt werden können. Die bevorzugten Transportrichtung kann beispielsweise von der Anzahl der zu durchlaufenden Netzwerkkoten, Zellen und/oder der Auslastung der zu durchlaufenden Netzwerkkoten, Zellen abhängen.

Nach Ausführungsformen ist das UWB-Überwachungssystem ferner konfiguriert zum
- Erfassen von Sensordaten, welche personenbezogene Sensordaten umfassen, in dem räumlichen Bereich unter Verwendung der UWB-Sensoren,
- Filtern der erfassten Sensordaten unter Verwendung eines Anonymisierungsfilters, wobei der Anonymisierungsfilter dazu konfiguriert ist, die personenbezogenen Sensordaten zu anonymisieren,
- Auswerten der erfassten Sensordaten zum Detektieren eines Ausnahmeereignisses,
- auf das Detektieren des Ausnahmeereignisses hin, zeitlich begrenzten Aussetzen des Anonymisierens der personenbezogene Sensordaten.

Ausführungsformen können den Vorteil haben, dass sichergestellt werden kann, dass personenbezogene Sensordaten, soweit diese von den UWB-Sensoren erfasst werden, in Folge der Anonymisierung nicht oder nur in einer solchen Form zur Verfügung gestellt werden, dass keine Rückschlüsse auf die Identität der Personen ermöglicht werden, auf welche die personenbezogenen Daten bezogen sind. Nach Ausführungsformen umfasst das Anonymisieren insbesondere ein Verändern personenbezogener Sensordaten derart, dass Einzelangaben über persönliche oder sachliche Verhältnisse nicht mehr oder nur mit einem unverhältnismäßig großen Aufwand an Zeit, Kosten und Arbeitskraft einer bestimmten oder bestimmbaren natürlichen Person zugeordnet werden können. Das Verändern umfasst beispielsweise ein inhaltliches Umgestalten erfasster personenbezogener Sensordaten bis hin zum Löschen derselben. Ein Löschen bezeichnet dabei beispielsweise ein Unkenntlichmachen personenbezogener Sensordaten bis hin zu einem vollständigen Entfernen der entsprechenden personenbezogenen Sensordaten von einem Speicher zum Speichern erfasster Sensordaten. Bei dem Speicher kann es sich beispielsweise um einen lokalen oder einen zentralen Speicher des UWB-Überwachungssystems handeln.

Personenbezogene Sensordaten bezeichnen Sensordaten, welche eine Identifikation einer Person ermöglichen oder einer Person zuordenbar sind, auf welche die personenbezogene Sensordaten bezogen sind. Insbesondere sind personenbezogene Sensordaten beispielsweise mittels eines der UWB-Sensoren erfasste Einzelangaben über persönliche oder sachliche Verhältnisse einer bestimmten oder bestimmbaren natürlichen Person. Beispielsweise umfassen die personenbezogene Sensordaten visuelle Sensordaten, wie etwa Video- und/oder Fotodaten, anhand derer eine Person erkannt werden kann. Dies ist insbesondere der Fall, wenn anhand der Video- und/oder Fotodaten ein Gesicht einer Person erkannt werden kann.

Ein Anonymisierungsfilter ist dazu konfiguriert selektiv personenbezogene Daten zu anonymisieren. Beispielsweise kann der Anonymisierungsfilter dazu konfiguriert sein Sensordaten, welche von bestimmten UWB-Sensoren bzw. einer bestimmten Art von UWB-Sensoren des UWB-Überwachungssystems erfasst werden, zu anonymisieren. Dabei handelt es sich beispielsweise um Video- und/oder Bilddaten, welche etwa unter Verwendung einer Überwachungskamera erfasst werden und auf denen individuelle Personen erkennbar sind.

Ein Ausnahmeereignis bezeichnet eine Anomalie in den erfassten Sensordaten, d.h. eine Datenkonstellation, welche unter vordefinierten Betriebsbedingungen nicht zu erwarten ist. Insbesondere kann es sich bei der Anomalie um eine Notfallsituation, wie etwa ein Feuer oder ein unerlaubtes Eindringen in den und/oder Bewegen innerhalb des räumlichen Bereiches.

Unter einem UWB-Token wird ein Hardwaretoken in Form eines mobilen tragbaren elektronischen Geräts verstanden, welches zu einer kabellosen Kommunikation mittels UWB konfiguriert ist. Ein UWB-Token kann zudem zu einer Bestimmung von Positionsdaten anhand einer Laufzeitmessung und Triangulation von UWB-Signalen konfiguriert sein, welche es von Lokalisierungssensoren des UWB-Überwachungssystems empfängt. Beispielsweise kann das UWB-Token als ein Dokument ausgestaltet sein, insbesondere ein Wert- oder Sicherheitsdokument. Unter einem "Dokument" werden papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeug-scheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise. In einem Speicher eines solchen Dokuments sind beispielsweise ein oder mehrere Attribute eines dem Dokument zugeordneten Nutzers oder Gegenstands gespeichert.

Nach Ausführungsformen umfasst das Detektieren des Ausnahmeereignisses ein Erfassen des Ausfalls des lokalen kabelgebundenen Netzwerks. Ausführungsformen können den Vorteil haben, dass bei einem Ausfall des lokalen kabelgebundenen Netzwerks ein zeitlich begrenztes Aussetzen des Anonymisierens der personenbezogene Sensordaten implementiert werden kann. Beispielsweise bei einem Ausfall des lokalen kabelgebundenen Netzwerks aufgrund eines Unglücks, können die entsprechenden personenbezogene Sensordaten für eine Koordination von Rettungs- und/oder Bergungsmaßnahmen wichtig sein. Ferner können die personenbezogene Sensordaten für eine Ermittlung der Unglücksursache hilfreich sein.

Nach Ausführungsformen ist das Aussetzen des Anonymisierens auf personenbezogene Sensordaten beschränkt, welche von UWB-Sensoren erfasst werden, die einen vordefinierten Bezug zu dem detektierten Ausnahmeereignis aufweisen. Beispielsweise besteht ein vordefinierter Bezug darin, dass die UWB-Sensoren, für deren personenbezogene Sensordaten das Anonymisieren ausgesetzt wird, einem selben räumlichen Abschnitt des räumlichen Bereiches zugeordnet sind wie der oder die UWB-Sensoren, in deren erfassten Sensordaten das Ausnahmeereignis detektiert wird. Ausführungsformen können den Vorteil haben, dass das Aussetzen des Anonymisierens nicht nur zeitlich, sondern auch räumlich begrenzt wird. Mithin kann ein unnötiges Aussetzen des Anonymisierens, z.B. für personenbezogene Daten, welche nichts mit dem Ausnahmeereignis zu tun haben, vermieden werden. Nach Ausführungsformen besteht der vordefinierte Bezug zusätzlich oder alternativ darin, dass UWB-Sensoren, für deren personenbezogene Sensordaten das Anonymisieren ausgesetzt wird, vordefinierten räumlichen Abschnitt des räumlichen Bereiches zugeordnet sind. Bei den entsprechenden räumlichen Abschnitten handelt es sich beispielsweise um Zu- und Ausgänge eines zugangsbeschränkten Bereiches. Im Falle eines möglichen unberechtigten Eindringens in den zugangsbeschränkten räumlichen Bereich oder bei einem möglichen Notfall, wie etwa einem Feueralarm, kann es von Vorteil sein zu erfassen, wer den zugangsbeschränkten räumlichen Bereich betritt und/oder verlässt oder wer versucht den zugangsbeschränkten räumlichen Bereich zu betreten und/oder zu verlassen.

Nach Ausführungsformen wird das Anonymisieren aller durch das UWB-Überwachungssystem erfasster personenbezogener Sensordaten zeitlich begrenzt ausgesetzt. Ausführungsformen können den Vorteil haben, dass sichergestellt werden kann, dass keine für eine Handhabung und/oder Behebung des Ausnahmeereignisses relevanten und/oder notwendigen personenbezogener Sensordaten aufgrund der Anonymisierung fehlen.

Nach Ausführungsformen umfasst das Anonymisieren durch den Anonymisierungsfilter ein Löschen zumindest eines Teils der personenbezogenen Sensordaten. Das zeitlich begrenzte Aussetzen des Anonymisierens umfasst ein Speichern der personenbezogenen Sensordaten, welche innerhalb eines begrenzten Zeitfensters erfasst werden.

Ausführungsformen können den Vorteil haben, dass im Falle eines Löschens, d.h. eines vollständigen Entfernens personenbezogener Sensordaten von lokalen und/oder zentralen Speichern des UWB-Überwachungssystems, sichergestellt werden kann, dass niemand Zugriff auf diese Daten erlangen kann. Tritt jedoch ein Ausnahmeereignis auf, so werden nur für diesen speziellen Fall zeitlich begrenzt personenbezogener Sensordaten, wie etwa Video- und/oder Bilddaten, gespeichert. Nach Ausführungsformen werden die gespeicherten Daten zum Zwecke einer Datenanalyse bereitgestellt, insbesondere zum Zwecke einer Identifikation von Personen, auf welche die gespeicherten personenbezogenen Sensordaten bezogen sind.

Nach Ausführungsformen handelt es sich bei dem Speichern um ein zeitlich begrenztes Speichern. Beispielsweise werden die gespeicherten personenbezogenen Sensordaten nach ihrer Auswertung und/oder auf eine Beendigung der Ausnahmesituation hin wieder gelöscht. Nach Ausführungsformen handelt es sich bei dem Speichern um ein dauerhaftes Speichern.

Nach Ausführungsformen beginnt das begrenzte Zeitfenster mit dem Detektieren des Ausnahmeereignisses. Nach Ausführungsformen endet das begrenzte Zeitfenster mit Ablauf einer vorbestimmten Zeitspanne oder einem Enden des Detektierens des Ausnahmeereignisses.

Ausführungsformen können den Vorteil haben, dass das Speichern der personenbezogenen Sensordaten zeitlich auf ein Zeitfenster begrenzt bleibt, welches in Bezug zu dem Detektierten Ausnahmeereignis steht. Es kann beispielsweise davon ausgegangen werden, dass lediglich in diesem Zeitfenster erfasste personenbezogene Sensordaten im Kontext des detektierten Ausnahmeereignis von Relevanz sind. Nach Ausführungsformen endet das begrenzte Zeitfenster beispielsweise, wenn das Ausnahmeereignis nicht mehr detektiert wird bzw. nicht mehr detektierbar ist. Im Falle eines möglichen Feuers als Ausnahmeereignis kann das Ausnahmeereignis beispielsweise in Form eines Detektierens von Rauch durch einen als Rauchmelder ausgestalteten UWB-Sensor des Überwachungssystems detektiert werden. Wird das Ausnahmeereignis nicht mehr detektiert, d.h. kein Rauch mehr detektiert, wird beispielsweise das Aussetzen des Anonymisierens beendet. Nach Ausführungsformen wird am Ende der vorbestimmten Zeitspanne geprüft, ob das Ausnahmeereignis noch detektierbar ist und/oder ob weitere Voraussetzungen erfüllt sind. Ist das Ausnahmeereignis nicht mehr detektierbar ist und sind gegebenenfalls die weiteren Voraussetzungen erfüllt, wird das Aussetzen des Anonymisierens beendet. Andernfalls wird das Aussetzen nochmals um die vorbestimmte Zeitspanne wiederholt bzw. fortgesetzt. Weitere Voraussetzungen umfassen beispielsweise ein Protokollieren einer Bestätigung in dem UWB-Überwachungssystem, dass das Ausnahmeereignis überprüft wurde und keine weiteren Maßnahmen notwendig sind bzw. alle notwendigen Maßnahmen ergriffen wurden. Alternative oder zusätzlich können die weiteren Voraussetzungen beispielsweise ein Protokollieren einer Bestätigung in dem UWB-Überwachungssystem umfassen, dass das Aussetzen des Anonymisierens nicht und/oder nicht mehr notwendig ist. Die vorbestimmte Zeitspanne kann beispielsweise eine Länge von Sekunden und/oder Minuten aufweisen.

Nach Ausführungsformen erfolgt das Löschen der personenbezogenen Sensordaten jeweils durch den die zu löschenden personenbezogenen Sensordaten erfassenden UWB-Sensor. Nach Ausführungsformen umfasst das Speichern der personenbezogenen Sensordaten jeweils ein Übertragen der personenbezogenen Sensordaten durch den die zu speichernden personenbezogenen Sensordaten erfassenden UWB-Sensor zumindest teilweise und/oder vollständig mittels UWB an ein Speichermodul des UWB-Überwachungssystems. Nach Ausführungsformen umfasst das Speichern der personenbezogenen Sensordaten jeweils ein Übertragen der personenbezogenen Sensordaten durch den die zu speichernden personenbezogenen Sensordaten erfassenden UWB-Sensor zumindest teilweise und/oder vollständig mittels einer kabelgebundenen Datenverbindung an ein Speichermodul des UWB-Überwachungssystems.

Ausführungsformen können den Vorteil haben, dass bei einem direkten Löschen durch den erfassenden UWB-Sensor sichergestellt werden kann, dass die zu löschenden personenbezogenen Sensordaten innerhalb des Überwachungssystems nicht über den erfassenden UWB-Sensor hinausgelangen. Mithin kann effektiv verhindert werden, dass sich jemand auf unerlaubte Weise Zugriff auf die personenbezogenen Sensordaten verschaffen kann. Ausführungsformen können ferner den Vorteil haben, dass die in dem Speichermodul gespeicherten personenbezogenen Sensordaten im Bedarfsfall zum Handhaben und/oder Beheben des Ausnahmeereignisses herangezogen werden können. Beispielsweise können die gespeicherten personenbezogenen Sensordaten analysiert werden, um zu bestimmen welche Personen in das Ausnahmeereignis involviert sind und/oder involviert sein könnten. Bei dem Speichermodul kann es sich um ein lokales Speichermodul einer Mehrzahl von dezentral über das UWB-Überwachungssystem verteilten Speichermodulen oder um ein zentrales Speichermodul des UWB-Überwachungssystems handeln.

Nach Ausführungsformen umfasst das Anonymisieren durch den Anonymisierungsfilter ein Verschlüsseln zumindest eines Teils der personenbezogenen Sensordaten. Nach Ausführungsformen umfasst das zeitlich begrenzte Aussetzen des Anonymisierens ein zeitlich begrenztes Bereitstellen der entsprechenden personenbezogenen Sensordaten in unverschlüsselter Form.

Ausführungsformen können den Vorteil haben, dass durch ein Verschlüsseln der personenbezogenen Sensordaten Zugriffe auf die personenbezogenen Sensordaten effektiv verhindert werden können. Andererseits kann im Falle eines Ausnahmeereignisses ein Zugriff auf bereits erfasste personenbezogenen Sensordaten mittels eines Entschlüsselns ermöglicht werden. Beispielsweise werden die personenbezogenen Sensordaten in entschlüsselter Form nur zeitlich begrenzt zur Verfügung gestellt.

Nach Ausführungsformen erfolgt das Verschlüsseln der personenbezogenen Sensordaten jeweils durch den die zu verschlüsselnden personenbezogenen Sensordaten erfassenden UWB-Sensor.

Ausführungsformen können den Vorteil haben, dass die personenbezogenen Sensordaten direkt bei ihrer Erfassung verschlüsselt werden und indem UWB-Überwachungssystem nur in verschlüsselter Form weiterverarbeitet werden. Eine Verschlüsselung kann beispielsweise mit einem öffentlichen kryptographischen Schlüssel eines asymmetrischen Schlüsselpaars erfolgen, sodass es von einem Besitzer des zugehörigen geheimen kryptographischen Schlüssels des entsprechenden asymmetrischen Schlüsselpaars entschlüsselt werden kann. Bei dem entsprechenden Besitzer handelt es sich beispielsweise um einen zentralen oder dezentralen Steuerungsserver oder ein Steuermodul des UWB-Überwachungssystems. Die geheimen kryptographischen Schlüssel werden beispielsweise in einem geschützten Speicherbereich eines Speichermoduls gespeichert, welcher dem entsprechenden Steuerungsserver oder Steuermodul zugeordnet ist. Nach Ausführungsformen stellt der Steuerungsserver oder das Steuermodul allen UWB-Sensoren oder zumindest allen zum Erfassen personenbezogenen Sensordaten konfigurierten UWB-Sensoren einen einheitlichen öffentlichen kryptographischen Schlüssel zum Verschlüsseln zur Verfügung. Nach Ausführungsformen stellt der Steuerungsserver oder das Steuermodul allen UWB-Sensoren oder zumindest allen zum Erfassen personenbezogenen Sensordaten konfigurierten UWB-Sensoren jeweils einen individuellen, dem entsprechenden UWB-Sensoren zugeordneten öffentlichen kryptographischen Schlüssel zum Verschlüsseln zur Verfügung. Nach Ausführungsformen stellt der Steuerungsserver oder das Steuermodul den UWB-Sensoren oder zumindest den zum Erfassen personenbezogenen Sensordaten konfigurierten UWB-Sensoren jeweils gruppenweise einen individuellen, der entsprechenden Gruppe zugeordneten einheitlichen öffentlichen kryptographischen Schlüssel zum Verschlüsseln zur Verfügung. Die Gruppen können dabei so eingeteilt sein, dass sie jeweils UWB-Sensoren umfassen, welche demselben räumlichen Abschnitt des räumlichen Bereiches zugeordnet sind, bei welchen es sich um dieselbe Art von UWB-Sensor handelt oder welche zum Erfassen derselben Art von personenbezogenen Sensordaten konfiguriert sind.

Nach Ausführungsformen umfasst das Bereitstellen der personenbezogenen Sensordaten in unverschlüsselter Form ein Aussetzen des Verschlüsselns der personenbezogenen Sensordaten, welche innerhalb eines begrenzten Zeitfensters erfasst werden. Ausführungsformen können den Vorteil haben, dass der Aufwand für ein Entschlüsseln der entsprechenden personenbezogenen Sensordaten vermieden werden kann und diese personenbezogenen Sensordaten zudem unverschlüsselt bleiben. Nach Ausführungsformen umfasst das Bereitstellen der personenbezogenen Sensordaten in unverschlüsselter Form ein Entschlüsseln verschlüsselter personenbezogenen Sensordaten, welche innerhalb des begrenzten Zeitfensters erfasst werden. Ausführungsformen können den Vorteil haben, dass die personenbezogenen Sensordaten selbst im Falle eines Ausnahmeereignisses ausschließlich in verschlüsselter Form gespeichert werden. Ein Bereitstellen der personenbezogenen Sensordaten in unverschlüsselter Form kann somit effektiv zeitlich beschränkt werden.

Nach Ausführungsformen beginnt das begrenzte Zeitfenster eine vorbestimmte Zeitspanne vor dem Detektieren des Ausnahmeereignisses oder mit dem Detektieren des Ausnahmeereignisses. Nach Ausführungsformen endet das begrenzte Zeitfenster mit Ablauf einer vorbestimmten Zeitspanne nach dem Detektieren des Ausnahmeereignisses oder mit einem Enden des Detektierens des Ausnahmeereignisses.

Ausführungsformen können den Vorteil haben, dass das Bereitstellen der personenbezogenen Sensordaten in unverschlüsselter Form zeitlich auf ein Zeitfenster begrenzt bleibt, welches in Bezug zu dem Detektierten Ausnahmeereignis steht. Es kann beispielsweise davon ausgegangen werden, dass lediglich in diesem Zeitfenster erfasste personenbezogene Sensordaten im Kontext des detektierten Ausnahmeereignis von Relevanz sind. Nach Ausführungsformen endet das begrenzte Zeitfenster beispielsweise, wenn das Ausnahmeereignis nicht mehr detektiert wird bzw. nicht mehr detektierbar ist. Im Falle eines möglichen Feuers als Ausnahmeereignis kann das Ausnahmeereignis beispielsweise in Form eines Detektierens von Rauch durch einen als Rauchmelder ausgestalteten UWB-Sensor des Überwachungssystems detektiert werden. Wird das Ausnahmeereignis nicht mehr detektiert, d.h. kein Rauch mehr detektiert, wird beispielsweise das Aussetzen des Verschlüsselns beendet. Nach Ausführungsformen wird am Ende der vorbestimmten Zeitspanne geprüft, ob das Ausnahmeereignis noch detektierbar ist und/oder ob weitere Voraussetzungen erfüllt sind. Ist das Ausnahmeereignis nicht mehr detektierbar ist und sind gegebenenfalls die weiteren Voraussetzungen erfüllt, wird das Aussetzen des Verschlüsselns beendet. Andernfalls wird das Aussetzen nochmals um die vorbestimmte Zeitspanne wiederholt bzw. fortgesetzt. Weitere Voraussetzungen umfassen beispielsweise ein Protokollieren einer Bestätigung in dem UWB-Überwachungssystem, dass das Ausnahmeereignis überprüft wurde und keine weiteren Maßnahmen notwendig sind bzw. alle notwendigen Maßnahmen ergriffen wurden. Alternative oder zusätzlich können die weiteren Voraussetzungen beispielsweise ein Protokollieren einer Bestätigung in dem UWB-Überwachungssystem umfassen, dass das Aussetzen des Verschlüsselns nicht und/oder nicht mehr notwendig ist. Die vorbestimmte Zeitspanne kann beispielsweise eine Länge von Sekunden und/oder Minuten aufweisen. Ein Beginn des begrenzten Zeitfensters eine vorbestimmte Zeitspanne vor dem Detektieren des Ausnahmeereignisses kann den Vorteil haben, dass auch relevante personenbezogene Sensordaten, welche im Vorfeld des Ausnahmeereignisses erfasst wurden in unverschlüsselter Form bereitgestellt werden können.

Nach Ausführungsformen ist das UWB-Überwachungssystem ferner konfiguriert zum
- Empfangen einer Anfrage zum Freigeben von erfassten Sensordaten,
- Prüfen eines von der Anfrage umfassten Berechtigungsnachweises zum Zugriff auf die angefragte Sensordaten,
- auf eine erfolgreiche Prüfung des Berechtigungsnachweises hin, Freigeben des Zugriffs auf die angefragten Sensordaten.

Ausführungsformen können den Vorteil haben, dass erfasste Sensordaten, insbesondere personenbezogene Sensordaten, nur dazu berechtigten Personen zur Verfügung gestellt werden. Eine Freigabe von Sensordaten, wie etwa Daten der Position und/oder anderer Daten, erfolgt beispielsweise gemäß eines Berechtigungsprofiles des Anfragenden. Somit kann ein effektiver Datenschutzlayer in das UWB-Überwachungssystem integriert werden. Ein Berechtigungsnachweis kann beispielsweise in Form eines Berechtigungszertifikats erbracht werden. Nach Ausführungsformen wird die Anfrage beispielsweise von einem dezentralen oder zentralen Steuerungsserver oder ein Steuermodul des UWB-Überwachungssystems empfangen und geprüft. Im Falle einer erfolgreichen Prüfung erfolgt beispielsweise auch die Freigabe durch den Steuerungsserver oder das entsprechende Steuermodul. Beispielsweise werden die angefragte Sensordaten in Antwort auf die Anfrage an den Sender der Anfrage gesendet oder auf einer Anzeigevorrichtung des UWB-Überwachungssystems angezeigt. Die Übertragung der angefragte Sensordaten erfolgt beispielsweise in verschlüsselter Form, insbesondere kann sie unter Verwendung einer Endezu-Ende-Verschlüsselung erfolgen.

Nach Ausführungsformen werden die erfassten Sensordaten in Kategorien eingeteilt und das Prüfen des Berechtigungsnachweises umfasst ein Prüfen, ob der Berechtigungsnachweis zu einem Zugriff auf Sensordaten der Kategorie berechtigt, welcher die angefragten Sensordaten zugeordnet sind.

Ausführungsformen können den Vorteil haben, dass Berechtigungen kategorieweise gewährt werden können, sodass Berechtigungsnachweise auf ein oder mehrere der Kategorien beschränkt werden können.

Nach Ausführungsformen werden die erfassten personenbezogenen Sensordaten in Kategorien eingeteilt und das Aussetzen der Anonymisierung erfolgt, beispielsweise in Abhängigkeit von der Art des detektierten Ausnaheereignisses, selektiv nur für ein oder mehrere ausgewählte Kategorien.

Nach Ausführungsformen wird die Zugriffsberechtigung des Berechtigungsnachweises auf das Detektieren des Ausnahmeereignisses hin zeitlich beschränkt erweitert. Eine Erweiterung des Berechtigungsnachweises bedeutet, das mit einem gegebenen Berechtigungsnachweis im Falle eines Detektierens eines Ausnahmeereignisses mehr Kategorien eingesehen werden dürfen, als wenn kein Ausnahmeereignis detektiert wird. Nach Ausführungsformen ist der Umfang der Erweiterung abhängig von der Art des detektierten Ausnahmeereignisses. Nach Ausführungsformen wird die Zugriffsberechtigung im Falle eines Detektierens eines Ausnahmeereignisses für alle gültigen Berechtigungsnachweise zum Zugriff auf zumindest eine Kategorie von Sensordaten auf alle Kategorien von Sensordaten zeitlich beschränkt erweitert.

Ausführungsformen können den Vorteil haben, dass beispielsweise in Abhängigkeit der Sensibilität der Sensordaten unterschiedliche Berechtigungsnachweise für einen Zugriff auf die entsprechenden Sensordaten notwendig sind und somit gesteuert werden kann, wer in welchem Umfang Zugriffsrechte auf die erfassten Sensordaten des UWB-Überwachungssystems gewährt bekommt. Somit kann eine Anpassung der Datenfreigabe beispielsweise durch das Berechtigungsprofil des Anfragenden an die aktuelle Gefahrensituation implementiert werden.

Nach Ausführungsformen werden den erfassten Sensordaten jeweils Ursprungs-IDs zugeordnet. Eine Voraussetzung für die erfolgreiche Prüfung des Berechtigungsnachweises umfasst eine gültige Bestätigung des Berechtigungsnachweises zum Zugriff auf die angefragten Sensordaten durch ein oder mehrere den Ursprungs-IDs der angefragten Sensordaten zugeordnete Instanzen.

Ausführungsformen können den Vorteil haben, das für einen Zugriff auf die erfassten Sensordaten eine Freigabe durch ein oder mehrere den Ursprungs-IDs, d.h. dem Ursprung, der angefragten Sensordaten zugeordnete Instanzen notwendig ist. Nach Ausführungsformen identifizieren die Ursprung-IDs jeweils den UWB-Sensor, welcher die entsprechenden Sensordaten erfasst hat, und/oder das UWB-Token, welches durch die entsprechenden Sensordaten sensiert wurde. Nach Ausführungsformen handelt es sich bei den entsprechenden Instanzen jeweils um die entsprechenden UWB-Sensoren, UWB-Token oder Nutzer bzw. Administratoren, welche den entsprechenden UWB-Sensoren oder UWB-Token zugeordnet sind.

Beispielsweise wird jeder lokalisierten Position, d.h. erfassten Sensordaten zur Lokalisation von UWB-Token, eine abgesicherte Information des UWB Token aufgeprägt, so dass stets Ursprung und Eigentümer der entsprechenden Sensordaten bekannt sind. Anfragen bezüglich einer Position oder Daten eines UWB-Tokens müssen in diesem Fall beispielsweise zuerst immer durch das betroffene UWB-Token oder einen Träger und/oder Vertreter desselben freigegeben werden.

Nach Ausführungsformen werden im Falle des Freigebens der angefragten Sensordaten Art, Zeit, Ort, Empfänger und/oder Verwendung der freigegebenen Sensordaten protokolliert.

Ausführungsformen können den Vorteil haben, dass anhand der entsprechenden Protokolle genau nachvollziehbar ist, was mit den erfassten Sensordaten geschieht, insbesondere wer Zugriff auf diese erhält. Nach Ausführungsformen erfolgt das Protokollieren in einer Blockchain. Eine Blockchain kann den Vorteil haben, dass diese eine fälschungssichere Speicherstruktur zum Speichern der zu protokollierenden Daten bereitstellt.

Nach Ausführungsformen umfasst das UWB-Überwachungssystem ein oder mehrere vortrainierte Maschinenlernmodule, welche jeweils dazu trainiert sind anhand von Anomalien in den erfassten Sensordaten Ausnahmeereignisse zu erkennen. Ausführungsformen können den Vorteil haben, dass ein automatisiertes Detektieren von Ausnahmeereignisse ermöglicht wird.

Nach Ausführungsformen umfasst die Mehrzahl von UWB-Sensoren eine Mehrzahl von Lokalisierungssensoren, welche zur Positionsbestimmung von UWB-Token innerhalb des räumlichen Bereiches konfiguriert sind. Die Positionsbestimmung erfolgt unter Verwendung von Laufzeitmessungen von UWB-Signalen zwischen UWB-Token und/oder Lokalisierungssensoren.

Ausführungsformen können den Vorteil haben, das unter Verwendung der UWB-Token effektiv überwacht werden kann, wo sich berechtigte Personen innerhalb des räumlichen Bereiches aufhalten. Beispielsweise erhält jede Peron, welche den räumlichen Bereich, etwa einen zugangsbeschränkten räumlichen Bereich, betritt einen entsprechenden UWB-Token. Wenn Daten zu einer Zuordnung einer Token-ID einer bestimmten Person nicht oder kryptographisch gesichert, z.B. in verschlüsselter Form, gespeichert werden, wird durch die Überwachung der UWB-Token eine anonymisierte Überwachung der Träger der UWB-Token ermöglicht. Beispielsweise ist eine notwendige Voraussetzung für ein Entschlüsseln der Daten zur Zuordnung ein Detektieren eines Ausnahmeereignisses.

Eine Lokalisierung von UWB-Token erfolgt beispielsweise mittel Triangulation unter Verwendung zumindest zwei oder drei Lokalisierungssensoren in Form von UWB-Antennen. Dabei können die Triangulationssignale von dem UWB-Token und/oder von den UWB-Antennen gesendet werden. Eine Auswertung der Triangulationssignale kann durch das UWB-Token und/oder die UWB-Antennen und/oder einem Auswertemodul des Überwachungssystems erfolgen.

Nach Ausführungsformen sendet das UWB-Überwachungssystem einen Aktivierungscode. Die UWB-Token werden jeweils bei Eintritt in eine Sendereichweite des UWB-Überwachungssystems auf einen Empfang des Aktivierungscodes hin aktiviert und bei Verlassen der Sendereichweite des UWB-Überwachungssystems auf ein Ausbleiben des Empfangs des Aktivierungscodes hin deaktiviert.

Ausführungsformen können den Vorteil haben, dass das UWB-Token nur innerhalb des räumlichen Bereiches bzw. innerhalb der Sendereichweite des UWB-Überwachungssystems aktiv Signale unter Verwendung von UWB sendet und somit überhaupt detektierbar ist.

Nach Ausführungsformen umfasst das Aktivieren der UWB-Token jeweils ein Aktivieren eines Sendens von UWB-Signalen durch den jeweiligen UWB-Token, insbesondere das Aktivieren des Sendens von UWB-Signalen an das Überwachungssystem. Durch das Aktivieren wird der entsprechende UWB-Token für das Überwachungssystem sichtbar. Nach Ausführungsformen umfasst das Deaktivieren der UWB-Token jeweils ein Deaktivieren des Sendens von UWB-Signalen durch den jeweiligen UWB-Token, insbesondere das Deaktivieren des Sendens von UWB-Signalen an das Überwachungssystem. Durch das Deaktivieren wird der entsprechende UWB-Token für das Überwachungssystem unsichtbar.

Nach Ausführungsformen werden Zugangsberechtigungen zu und/oder Aufenthaltsberechtigungen in einem räumlichen Bereich, bei welchem es sich um einen zugangsbeschränkten räumlichen Bereich handelt, unter Verwendung der UWB-Token nachgewiesen.

Ausführungsformen können den Vorteil haben, das mittels der UWB-Token nicht nur Bewegungen der Träger innerhalb eines zugangsbeschränkten räumlichen Bereiches nachverfolgt werden können, sondern kontrolliert werden kann, ob eine Zugangsberechtigungen und/oder Aufenthaltsberechtigungen zu bzw. in dem zugangsbeschränkten räumlichen Bereich und/oder bestimmte räumlichen Abschnitte desselben vorliegt. Basierend hierauf kann erkannt werden, ob sich ein Träger eines UWB-Tokens berechtigter Weise in dem zugangsbeschränkten räumlichen Bereich und/oder einem räumlichen Abschnitt desselben aufhält. Beispielsweise können Zugangsschranken, wie etwa Türen zu dem zugangsbeschränkten räumlichen Bereich und/oder einem räumlichen Abschnitt desselben automatisch öffnen, wenn sich ein Träger eines UWB-Tokens mit gültiger Zugangsberechtigungen der Zugangsschranke nähert. Nach Ausführungsformen können für unterschiedliche räumliche Abschnitte des zugangsbeschränkten räumlichen Bereiches unterschiedliche Zugangsberechtigungen notwendig sein.

Nach Ausführungsformen werden Zugangsberechtigungen und/oder Aufenthaltsberechtigungen durch den Besitz des UWB-Tokens nachgewiesen. Nach werden Zugangsberechtigungen und/oder Aufenthaltsberechtigungen durch Berechtigungszertifikate nachgewiesen. Ein Berechtigungszertifikat ist ein digitales Zertifikat, welches einem UWB-Token und/oder einem Nutzer des entsprechenden UWB-Tokens eine Zugangsberechtigung und/oder Aufenthaltsberechtigung zuweist. Beispielsweise definiert ein Berechtigungszertifikat Zugangsberechtigungen und/oder Aufenthaltsberechtigungen, umfasst einen öffentlichen kryptographischen Schlüssel eines dem UWB-Token zugeordneten asymmetrischen kryptographischen Schlüsselpaars, eine Token-ID, Angeben zum Aussteller des Berechtigungszertifikats und/oder eine digitale Signatur eines Ausstellers. Bei dem Aussteller kann es sich beispielsweise um eine externe Instanz, dezentrales oder zentrales Steuermodul des UWB-Überwachungssystems oder einen anderen UWB-Token handeln, welcher selber über die erteilten Zugangsberechtigungen und/oder Aufenthaltsberechtigungen verfügt. Zugangsberechtigungen und/oder Aufenthaltsberechtigungen lassen sich beispielsweise unter Verwendung des Berechtigungszertifikats in Verbindung mit einer Signatur des UWB-Tokens unter Verwendung eines privaten kryptographischen Schlüssels des dem UWB-Token zugeordneten asymmetrischen kryptographischen Schlüsselpaars. Anhand des von dem Berechtigungszertifikat bereitgestellten öffentlichen kryptographischen Schlüssels kann die Signatur geprüft und mithin der Besitz des privaten kryptographischen Schlüssels seitens des UWB-Tokens verifiziert werden. Das Berechtigungszertifikat definiert beispielsweise für den Besitzer des privaten kryptographischen Schlüssels durch den Aussteller des Berechtigungszertifikats gewährte Zugangsberechtigungen und/oder Aufenthaltsberechtigungen. Nach Ausführungsformen sind die Zugangsberechtigungen und/oder Aufenthaltsberechtigungen zeitlich beschränkt. Beispielsweise ist eine zeitliche Beschränkung durch ein Ablaufdatum und/oder eine Ablaufzeit des Berechtigungszertifikats definiert.

Nach Ausführungsformen umfasst das Detektieren des Ausnahmeereignisses ein Erfassen einer Anzahl von Personen in dem räumlichen Bereich, etwa einem zugangsbeschränkten räumlichen Bereich, unter Verwendung der UWB-Sensoren, welche zumindest lokal von der Anzahl der unter Verwendung der UWB-Token in dem räumlichen Bereich erfassten Anzahl von zugangsberechtigten Personen abweicht.

Ausführungsformen können den Vorteil haben, dass Versuche sich ohne Zugangsberechtigung Zugang zu dem zugangsbeschränkten räumlichen Bereich oder Abschnitten desselben zu verschaffen und/oder Versuche sich der Bewegungsüberwachung durch das UWB-Überwachungssystem innerhalb des zugangsbeschränkten räumlichen Bereiches effektiv detektiert werden können.

Nach Ausführungsformen ist jedes der UWB-Token jeweils einem Nutzer zugeordnet. In den UWB-Token sind beispielsweise jeweils ein oder mehrere Referenzwerte für personenbezogenen Sensordaten zum Authentifizieren des zugeordneten Nutzers, d.h. Authentifizierungsdaten, gespeichert. Der Nachweis einer Zugangsberechtigung und/oder Aufenthaltsberechtigung unter Verwendung eines der UWB-Token umfasst beispielsweise ein Bestätigen eines Authentifizierens des dem entsprechenden UWB-Token zugeordneten Nutzers durch das UWB-Token. Das Authentifizieren durch das UWB-Token umfasst beispielsweise ein lokales Validieren von Authentifizierungsdaten durch das UWB-Token unter Verwendung der in dem UWB-Token gespeicherten ein oder mehreren Referenzwerten.

Nach Ausführungsformen umfassen die UWB-Token beispielsweise jeweils einen Sensor zum Erfassen der Authentifizierungsdaten. Nach Ausführungsformen werden die Authentifizierungsdaten des Nutzers beispielsweise jeweils durch einen Sensor der UWB-Tokens erfasst. Nach Ausführungsformen werden die Authentifizierungsdaten beispielsweise durch einen lokalen Sensor des UWB-Überwachungssystems erfasst und an den UWB-Token zum Validieren gesendet. Nach Ausführungsformen erfolgt das Senden der erfassten Authentifizierungsdaten in verschlüsselter Form. Nach Ausführungsformen werden die Referenzwerte in verschlüsselter Form gespeichert und das lokale Validieren der erfassten Authentifizierungsdaten erfolgt in verschlüsselter Form.

Nach Ausführungsformen umfassen die Authentifizierungsdaten biometrische Daten des Nutzers, welche unter Verwendung eines biometrischen Sensors erfasst werden. Biometrische Daten können beispielsweise umfassen: DNA-Daten, Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster, Zahnmusterdaten.

Nach Ausführungsformen umfassen die Authentifizierungsdaten verhaltensbasierte Daten des Nutzers. Verhaltensbasiert Daten sind Daten, welche auf einem intrinsischen Verhalten des Nutzers beruhen und können beispielsweise umfassen: Bewegungsmuster, Gangmuster, Arm-, Hand-, Fingerbewegungsmuster, Lippenbewegungsmuster. Ein Verwenden von verhaltensbasierten Daten zum Authentifizieren des Nutzers kann den Vorteil haben, dass der Nutzer zum Zwecke des Authentifizierens sein übliches, für ihn charakteristisches Verhalten fortsetzen kann, ohne dass für ihn untypische zusätzliche Handlungen notwendig sind. Insbesondere muss der Nutzer sein übliches Verhalten nicht unterbrechen.

Zum Erfassen der verhaltensbasierten Daten wird ein Sensor zum Erfassen verhaltensbasierter Daten verwendet. Bei den verhaltensbasierten Daten handelt es sich beispielsweise um Bewegungsdaten, welche unter Verwendung eines als Bewegungssensor konfigurierten Authentifizierungssensor erfasst werden. Der Bewegungssensor kann beispielsweise einen Beschleunigungssensor umfassen. Eine Bewegung kann beispielsweise durch Integration über Beschleunigungsmesswerte, welche der Beschleunigungssensor erfasst, berechnet werden. Der Bewegungssensor kann beispielsweise zudem seine Lage im Raum und/oder Veränderungen der Lage detektieren. Beispielsweise umfasst der Bewegungssensor ein Gyroskop. Bei den durch den Bewegungssensor erfassten Bewegungsdaten handelt es sich beispielsweise um Beschleunigungs-, Neigungs- und/oder Positionsdaten.

Bei erfassten Bewegungsdaten handelt es sich beispielsweise um Daten von Bewegungen des UWB-Tokens, welche dadurch verursacht werden, dass der Nutzer das UWB-Token mit sich führt, beispielsweise am Körper trägt. Durch die charakteristischen Bewegungen des Nutzers wird der UWB-Token in einer für den Nutzer charakteristischer Weise mitbewegt. Dies ist selbst dann der Fall, wenn der Nutzer nicht aktive mit dem UWB-Token interagiert, z.B. keine Benutzerschnittstelle des UWB-Tokens, wie etwa eine Taste, eine Tastatur, einen Touchscreen, ein Mikrophon, nutzt.

Nach Ausführungsformen umfasst das UWB-Token ein Klassifikationsmodul, welches zum Erkennen eines oder mehrerer generischer Bewegungsmuster unter Verwendung von Bewegungsdaten konfiguriert ist. Bei den Bewegungsmustern kann es sich beispielweise um grob- und/oder feinmotorische Bewegungen des UWB-Tokens handeln, wie sie für eine Nutzung des UWB-Tokens, etwa ein Mitführen und/oder Tragen am Körper, durch einen individuellen Nutzer charakteristisch sind. Beispielsweise ist das Klassifikationsmodul zum Erkennen der generischen Bewegungsmuster unter Verwendung von Trainingsdatensätzen mit Bewegungsdaten einer Nutzerkohorte vortrainiert.

Nach Ausführungsformen wird der Nutzer im Zuge einer Einlernphase als Nutzer des UWB-Tokens registriert. Nach Ausführungsformen umfasst die Einlernphase ein Erfassen von Bewegungsdaten des Nutzers durch einen Authentifizierungssensor in Form eines Bewegungssensors des UWB-Tokens und Extrahieren von ein oder mehreren für den zu registrierenden Nutzer charakteristischen Referenzwerten.

Nach Ausführungsformen umfasst ein verhaltensbasiertes Authentifizieren eines Nutzers unter Verwendung des UWB-Tokens die folgenden Schritte:
- Erfassen von Bewegungsdaten durch einen Authentifizierungssensor in Form eines Bewegungssensors des UWB-Tokens,
- Eingeben der erfassten Bewegungsdaten in das Klassifikationsmodul,
- Generieren eines Klassifikationsergebnisses durch das Klassifikationsmodul, ob der aktuelle Nutzer ein in dem UWB-Token registrierte Nutzer ist,
- Erzeugen eines Authentifizierungssignals, falls das Klassifikationsergebnis ein Prüfungskriterium erfüllt, wobei das Authentifizierungssignal eine erfolgreiche Authentifizierung des aktuellen Nutzers signalisiert.

Das Prüfkriterium kann beispielsweise umfassen, dass eine ausreichen hohe Übereinstimmung zwischen den erfassten Bewegungsdaten und einem oder mehreren für den registrierten Nutzer hinterlegten Referenzwerten vorliegt. Ferner kann das Prüfkriterium umfassen, dass die erfassten Bewegungsdaten und/oder die verwendeten ein oder mehreren Referenzwerte ein maximales Alter nicht überschreiten.

Nach Ausführungsformen werden die vorgenannten Schritte des Erfassens der Bewegungsdaten, des Eingebens der Bewegungsdaten und des Generierens des Klassifikationsergebnisses wiederholt nacheinander ausgeführt. Ferner wird zusätzliche zum Schritt des Generierens des Klassifikationsergebnisse jeweils der Schritt ausgeführt:
- Speichern des Klassifikationsergebnisses in dem Speicher des UWB-Tokens.

Das Erzeugen eines Authentifizierungssignals umfasst beispielsweise:
auf eine Authentifizierungsanfrage hin, Zugreifen auf den Speicher des UWB-Tokens zum Auslesen des gespeicherten Klassifikationsergebnisses, beispielsweise des zuletzt gespeicherten Klassifikationsergebnisses,
Auslesen und Auswerten des Klassifikationsergebnisses gemäß dem Prüfungskriterium.

Nach Ausführungsformen können erfasste Bewegungsdaten im Falle einer erfolgreichen Authentifizierung des Nutzers zum Anpassen und/oder Verbessern der für den entsprechenden Nutzer hinterlegten Referenzwerte verwendet werden.

Nach Ausführungsformen ist die Authentifizierung wissensbasiert. Beispielsweise umfassen die Authentifizierungsdaten ein persönliches Passwort des Nutzers. Bei dem Passwort kann es sich beispielsweise um eine alphanumerische Zeichenfolge handeln.

Nach Ausführungsformen ist die Authentifizierung besitzbasiert. Nach Ausführungsformen umfassen die Authentifizierungsdaten signierte Daten eines oder mehrere weiterer dem Nutzer zugeordneter elektronischer Geräte, insbesondere mobile tragbare elektronische Geräte. Bei den entsprechenden elektronischen Geräten handelt es sich beispielsweise um Smart Devices, welche der Nutzer mit sich führt, etwa wie Smartphone, Smartwatch, Smartglasses, Phablets, Tablets, Smart band, Smart Keychain, Smartcard etc. Diese elektronischen Geräte senden ein reichweitenbeschränktes Signal, welches ihre Anwesenheit signalisiert. Beispielsweise umfasst das Signal eine ID des entsprechenden elektronischen Gerätes. Beispielsweise ist das Signal mit einem kryptographischen Signaturschlüssel des entsprechenden elektronischen Gerätes signiert. Bei dem Signal kann es sich beispielsweise um ein Bluetooth oder ein UWB-Signal handeln. Im Falle einer Nutzung eines UWB-Signals, handelt es sich bei der Mehrzahl von elektronischen Geräten um eine Mehrzahl von UWB-Token. Für ein erfolgreiches Authentifizieren des Nutzers kann es notwendig sein, dass dieser eine bestimmte Anzahl an ihm zugeordneten elektronischen Geräten mit sich führt. Ein elektronisches Gerät mag gestohlen werden, je höher jedoch die Anzahl der für das erfolgreiche Authentifizieren notwendigen elektronischen Geräten ist, desto geringer ist die Wahrscheinlichkeit, dass diese von einem anderen Nutzer als dem registrierten Nutzer mitgeführt werden, beispielsweise infolge eines Diebstahls.

Nach Ausführungsformen ist jedes der UWB-Token jeweils einem Nutzer zugeordnet. In den UWB-Token sind jeweils ein oder mehrere Referenzwerte für personenbezogenen Sensordaten zum Authentifizieren des zugeordneten Nutzers gespeichert. Der Nachweis einer Zugangsberechtigung und/oder Aufenthaltsberechtigung unter Verwendung eines der UWB-Token umfasst ein Bestätigen eines Authentifizierens des dem entsprechenden UWB-Token zugeordneten Nutzers durch das UWB-Token. Das Authentifizieren durch das UWB-Token umfasst ein lokales Validieren von personenbezogenen Sensordaten durch das UWB-Token unter Verwendung der in dem UWB-Token gespeicherten ein oder mehreren Referenzwerten.

Detektieren ein oder mehrere UWB-Sensoren, etwa Trittschallsensoren, Bewegungsmelder, Lichtschranken oder Gasdetektoren, eine Anwesenheit einer Person in einem räumlichen Abschnitt des räumlichen Bereiches, in welchem kein UWB-Token detektiert wird, so ist dies ein Hinweis auf einen Versuch eines unerlaubten Eindringens. Ebenso können Unterschiede in Bewegungsmustern von UWB-Token und detektierten Personen auf unberechtigte Aktivitäten hindeuten, etwa falls ein UWB-Token an einer Stelle ruht, während anhand der erfassten Sensordaten Bewegungen einer Person detektiert werden.

Nach Ausführungsformen umfasst ein Ausnahmeereignis beispielsweise ein Erfassen einer Anzahl von Personen, welche die Anzahl der erfassten zugangsberechtigten Personen bzw. der erfassten UWB-Token zumindest lokal überschreitet.

Nach Ausführungsformen umfasst das Detektieren des Ausnahmeereignisses ein Erfassen eines UWB-Tokens in einem räumlichen Abschnitt des räumlichen Bereiches, etwa eines zugangsbeschränkten räumlichen Bereiches, für welchen der entsprechende UWB-Token keine Zugangsberechtigung besitzt.

Nach Ausführungsformen umfasst das Detektieren des Ausnahmeereignisses ein Erfassen von nicht personenbezogenen Sensordaten, welche einen vordefinierten Schwellenwert überschreiten.

Ausführungsformen können den Vorteil haben insbesondere Notfallsituationen effektiv erkannt werden können, wie etwa ein Feuer unter Verwendung eines als Rauchmelder konfigurierten UWB-Sensors oder ein Einbruch unter Verwendung eines als Glasbruch konfigurierten UWB-Sensors. So kann beispielsweise erhöhte Bewegungsaktivität und ein gleichzeitiger Temperaturanstieg zunächst als unklares Ausnahmeereignis bis hin zur Gefahrensituation interpretiert werden.

Nach Ausführungsformen umfasst die Mehrzahl von UWB-Sensoren Sensoren zum Erfassen optischer, akustischer, chemischer, thermischer, elektromagnetischer und/oder vibrationsbasierter Sensordaten.

Ausführungsformen können den Vorteil haben, dass unter Verwendung der entsprechenden Sensoren eine Vielzahl unterschiedlicher Sensordaten erfasst und somit eine Vielzahl unterschiedlicher Situationen bzw. Gegebenheiten innerhalb des räumlichen Bereiches erkannt werden können. Die UWB-Sensoren umfassen beispielsweise ein oder mehrere UWB-Radarsensoren, Glasbruchsensoren, Trittschallsensoren, Gassensoren, Bewegungsmelder, Videosensoren, Infrarotsensoren, Temperatursensoren und/oder Rauchsensoren.

Positionsdaten der UWB-Token werden beispielsweise mittels der Lokalisierungssensoren erfasst. Sensordaten, welche indikativ für eine Anwesenheit einer Person sind, können beispielsweise unter Verwendung von UWB-Radar, Hochfrequenzstrahlung, Mikrowellenstrahlung, Dopplerradar, Laser, Ultraschall, Infraschall, Infrarotstrahlung, Vibrationsmessungen oder Gaskonzentrationsmessungen erfasst werden. Hält sich eine Person im Erfassungsbereich eines Sensors auf, reflektiert, streut oder unterbricht diese beispielsweise von dem Sensor ausgesandte Strahlung oder Wellen, wie UWB-Radar, Hochfrequenzstrahlung, Mikrowellenstrahlung, Dopplerradar, Laserstrahlen, Ultraschall, oder erzeugt messbare Strahlung, Wellen oder anderweitige Einflüsse, wie Infrarotstrahlung, Vibrationen, z.B. Trittschall, Infraschall oder Gaskonzentrationsänderungen, z.B. eine Erhöhung der Kohlenstoffdioxidkonzentration.

Ausführungsformen umfassen ferner ein Verfahren zum Steuern eines UWB-Überwachungssystems zur Überwachung eines räumlichen Bereiches. Das UWB-Überwachungssystem umfasst eine Mehrzahl von UWB-Sensoren, welche in dem räumlichen Bereich verteilt angeordnet sind. Die UWB-Sensoren sind für ein Erfassen von Sensordaten konfiguriert. Die UWB-Sensoren sind ferner für eine kabellose UWB-Kommunikation konfiguriert. Ein oder mehrere der UWB-Sensoren sind zur Übertragung erfasster Sensordaten an ein lokales kabelgebundenes Netzwerk mit einem zentralen oder abgesetzten Steuerungsserver zum Steuern des Betriebs des UWB-Überwachungssystems angeschlossen. Ferner sind die UWB-Sensoren dazu konfiguriert, ein UWB-Mesh-Netzwerk mit einer vermaschten Netzwerktopologie als ein zu dem lokalen kabelgebundenen Netzwerk zumindest teilweise redundantes kabelloses Netzwerk bereitzustellen. Ein oder mehrere der UWB-Sensoren umfassen jeweils ein Steuermodul mit einer Notfunktion. Die Notfunktion umfasst Steuerungsfunktionen zumindest zum lokalen Betrieb eines Teils des UWB-Überwachungssystems unter Verwendung des UWB-Mesh-Netzwerks.

Das Verfahren umfasst:
- auf einen Ausfall des lokalen kabelgebundenen Netzwerks hin, Aktivieren der Notfunktion der UWB-Sensoren zum lokalen Betrieb des UWB-Überwachungssystems unter Verwendung des UWB-Mesh-Netzwerks,
- Übertragen erfasster Sensordaten mittels UWB über das UWB-Mesh-Netzwerk.

Nach Ausführungsformen ist das Verfahren zum Steuern des UWB-Überwachungssystems dazu konfiguriert jede der zuvor beschrieben Ausführungsformen des UWB-Überwachungssystems zu steuern.

Nach Ausführungsformen umfasst das Verfahren ferner:
- Erfassen von Sensordaten in dem räumlichen Bereich unter Verwendung der UWB-Sensoren, wobei die erfassten Sensordaten personenbezogene Sensordaten umfassen,
- Filtern der erfassten Sensordaten unter Verwendung eines Anonymisierungsfilters, wobei der Anonymisierungsfilter dazu konfiguriert ist, die personenbezogenen Sensordaten zu anonymisieren,
- Auswerten der erfassten Sensordaten zum Detektieren eines Ausnahmeereignisses,
- auf das Detektieren des Ausnahmeereignisses hin, zeitlich begrenzten Aussetzen des Anonymisierens der personenbezogene Sensordaten.

Im Weiteren werden Ausführungsformen der Erfindung mit Bezugnahme auf die Zeichnungen näher erläutert. Es zeigen:
- Figur 1: ein schematisches Diagramm eines exemplarischen UWB-Überwachungssystems,
- Figur 2: ein schematisches Diagramm eines exemplarischen UWB-Überwachungssystems,
- Figur 3: ein schematisches Diagramm eines exemplarischen UWB-Überwachungssystems,
- Figur 4: ein schematisches Diagramm eines exemplarischen UWB-Überwachungssystems,
- Figur 5: ein schematisches Diagramm eines exemplarischen UWB-Sensors,
- Figur 6: ein schematisches Diagramm eines exemplarischen UWB-Sensors,
- Figur 7: ein schematisches Diagramm eines exemplarischen UWB-Tokens,
- Figur 8: ein Flussdiagramm eines exemplarischen Verfahrens zum Steuern eines UWB-Überwachungssystems,
- Figur 9: ein Flussdiagramm eines exemplarischen Verfahrens zum Steuern eines UWB-Überwachungssystems und
- Figur 10: ein Flussdiagramm eines exemplarischen Verfahrens zum Steuern eines UWB-Überwachungssystems.

Elemente der nachfolgenden Ausführungsformen, die einander entsprechen, werden mit denselben Bezugszeichen gekennzeichnet.

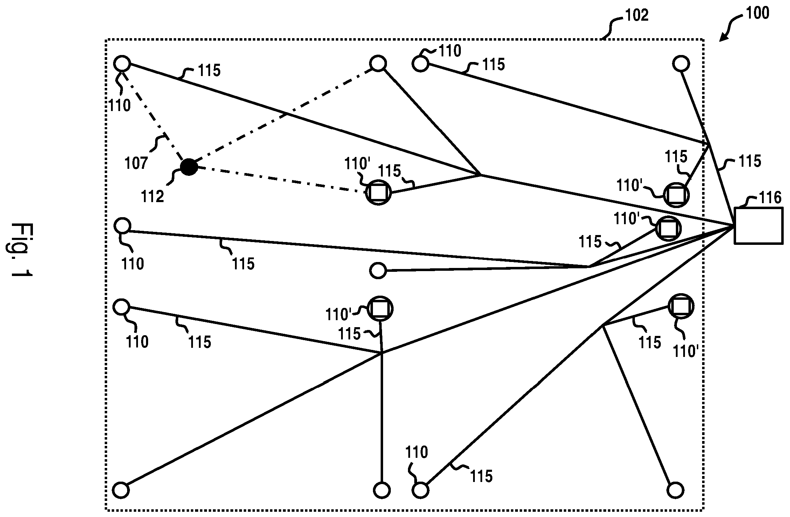

Figur 1 zeigt ein exemplarisches UWB-Überwachungssystem 100 zur Überwachung eines räumlichen Bereiches 102. Das UWB-Überwachungssystem umfasst eine Mehrzahl von über den räumlichen Bereich 102 verteilten UWB-Sensoren 110, 110'. Die UWB-Sensoren 110, 110' sind für ein Erfassen von Sensordaten, wie etwa Positionsdaten, Bewegungsdaten, Bilddaten, Tondaten, Vibrationsdaten, Temperaturdaten, Strukturdaten, Gaskonzentrationsdaten, Partikelkonzentrationsdaten etc. konfiguriert. Die UWB-Sensoren 110, 110' sind mittels LAN-Verbindungen 115 zur Übertragung erfasster Sensordaten an ein lokales kabelgebundenes Netzwerk mit einem zentralen oder abgesetzten Steuerungsserver 116 zum Steuern des Betriebs des UWB-Überwachungssystems 100 angeschlossen. Der zentrale Steuerungsserver 116 ist zur Steuerung des UWB-Überwachungssystems 100 konfiguriert. Einige UWB-Sensoren 110' der Mehrzahl von UWB-Sensoren 110, 110' umfassen ein Steuermodul mit einer Notfunktion. Die Notfunktion umfasst Steuerungsfunktionen zumindest zum lokalen Betrieb eines Teils des UWB-Überwachungssystems 100 unter Verwendung eines UWB-Mesh-Netzwerks. Nach Ausführungsformen können beispielsweise auch nur die UWB-Sensoren 110' mit Steuermodul mittels LAN-Verbindungen 115 an das lokale kabelgebundene Netzwerk angeschlossen sein. Die weiteren UWB-Sensoren 110 können in diesem Fall beispielsweise mittels UWB-Verbindungen über die UWB-Sensoren 110' mit Steuermodul mit dem zentralen oder abgesetzten Steuerungsserver 116 verbunden sein.

Das Überwachungssystem 100 kann ferner dazu konfiguriert sein unter Verwendung der UWB-Sensoren 110, 110' UWB-Token 112 innerhalb des räumlichen Bereiches 102 zu lokalisieren. Hierzu werden beispielsweise UBW-Lokalisierungssignale 107 verwendet, welche von als Lokalisierungssensoren konfigurierten UWB-Sensoren 110, 110' an die entsprechenden UWB-Token 112 gesendet werden und umgekehrt. Anhand von Laufzeitunterschieden der übertragenen Signale können beispielsweise mittels Triangulation die relativen Positionen der UBW-Token 112 zu den UWB-Antennen der festinstallierten UWB-Sensoren 110, 110' und somit die Positionen der UBW-Token 112 in dem räumlichen Bereich 102 präzise bestimmt werden. Das lokale kabelgebundene Netzwerk kann eine beliebige Netzwerktopologie aufweisen.

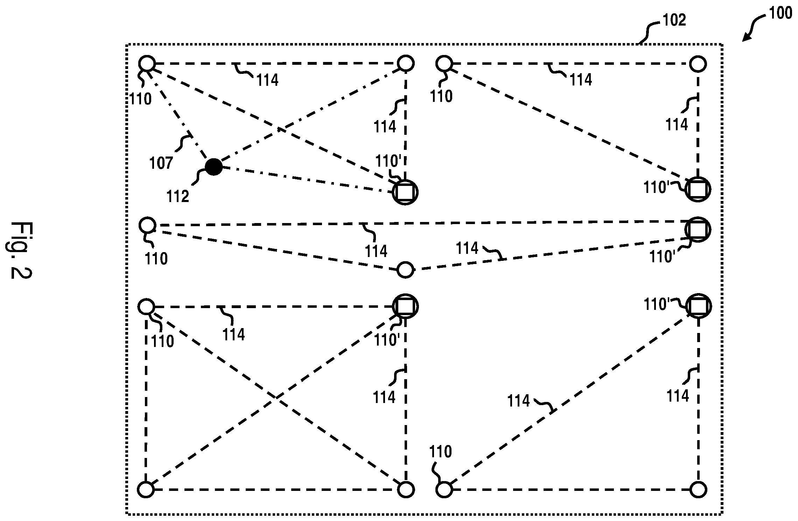

Figur 2 zeigt das UWB-Überwachungssystem 100 aus Figur 1 bei einem Ausfall des lokalen kabelgebundenen Netzwerks. In diesem Fall werden unter Verwendung der Notfunktion der UWB-Sensoren 110' mit Steuermodul zum lokalen Betrieb des UWB-Überwachungssystems unter Verwendung des UWB-Mesh-Netzwerks aktiviert. Die UWB-Sensoren 110, 110' sind mittels UWB-Verbindungen 114 miteinander verbunden. Über diese UWB-Verbindungen 114 können Sensordaten der UWB-Sensoren 110, 110' übertragen und beispielsweise zur Lokalisierung von UWB-Token 112 innerhalb des räumlichen Bereiches 102 verwendet werden. Im Falle der in Figur 2 gezeigten exemplarischen Konfiguration ist das UWB-Mesh-Netzwerk insular aufgebaut und umfasst das eine Mehrzahl von autarken Zellen. Jede der Zellen umfasst einen UWB-Sensoren 110' mit Steuermodul zum lokalen Betrieb des UWB-Überwachungssystems innerhalb der entsprechenden Zelle unter Verwendung der UWB-Verbindungen 114. Die Zellen umfassen ferner jeweils eine Mehrzahl weiterer UWB-Sensoren 110, welche mittels UWB-Verbindungen 114 den UWB-Sensoren 110' mit Steuermodul verbunden sind. Ein UWB-Sensor kann beispielsweise als stationäre UWB-Antenne bzw. stationärer UWB-Anker, aber auch als UWB-Token konfiguriert sein.

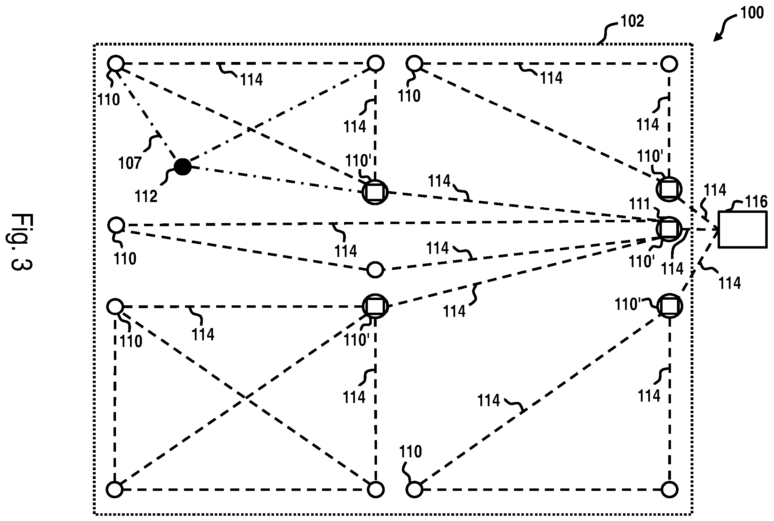

Figur 3 zeigt eine weitere exemplarische Konfiguration des UWB-Überwachungssystems 100 aus Figur 1 bei einem Ausfall des lokalen kabelgebundenen Netzwerks. Im Falle der exemplarischen Konfiguration der Figur 3, sind die Zellen miteinander verbunden und bilden beispielsweise einen Zellverbund, welcher eine Mehrzahl von Zellen umfasst. In der in Figur 3 gezeigten exemplarischen Konfiguration umfasst der Zellverbund drei Zellen. Ein Datenaustausch zwischen benachbarten Zellen erfolgt beispielsweise mittels der UWB-Sensoren 110' mit Steuermodul, deren Steuerungsfunktionen für einen solchen Datenaustausch konfiguriert sind. Solche UWB-Sensoren 110' sind beispielsweise als UWB-Transceiver 111 konfiguriert. Nach Ausführungsformen kann ein solcher Datenaustausch auch über UWB-Sensoren 110 erfolgen, welche kein Steuermodul umfassen und beispielsweise als UWB-Transceiver konfiguriert sind. Nach Ausführungsformen kann das UWB-Überwachungssystem 100 auch zusätzliche UWV-Transceiver zur Datenübertragung, beispielsweise zwischen Zellen, umfassen. Im Falle der in Figur 3 gezeigten exemplarischen Konfiguration des UWB-Überwachungssystems 100 werden die erfassten Sensordaten über dat UWB-Mesh-Netzwerk an den zentralen Steuerungsserver 116 zur Steuerung des UWB-Überwachungssystems 100 übertragen. Nach alternativen Ausführungsformen, können die Funktionen des zentralen Steuerungsservers 116 auch teilweise oder vollständig durch die Steuerungsmodule der UWB-Sensoren 110' ersetzt werden. Diese UWB-Sensoren 110', deren Steuerungsmodule Funktionen des zentralen Steuerungsservers 116 ersetzen sind beispielsweise nicht über UWB-Verbindungen 114 mit dem zentralen Steuerungsserver 116 verbunden.

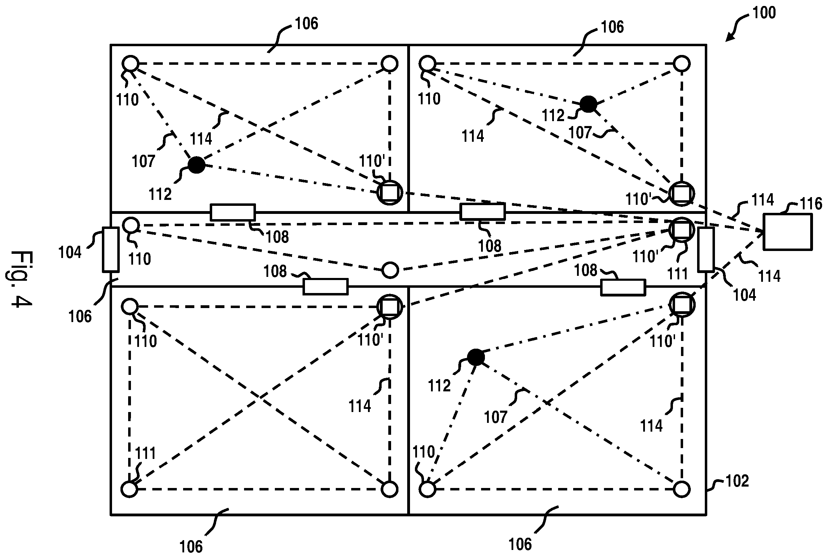

Figur 4 zeigt die exemplarische Konfiguration des UWB-Überwachungssystems 100 aus Figur 3 in mehr Details. Bei dem räumlichen Bereiches 102 handelt es sich beispielsweise um einen zugangsbeschränkten räumlichen Bereich. Dieser zugangsbeschränkte räumliche Bereich ist gegenüber der Umgebung beispielsweise abgegrenzt und bestimmungsgemäß nur über ein oder mehrere Ein- bzw. Ausgänge 104 betretbar. Beispielsweise handelt es sich bei dem räumlichen Bereich 102 um einen Indoor-Bereich bzw. Innenbereich innerhalb eines Gebäudes. Alternativ oder zusätzlich kann der räumliche Bereich 102 auch einen Outdoor-Bereich bzw. Außenbereich außerhalb eines Gebäudes umfassen. Beispielsweise kann dieser Outdoor-Bereich ein zugangsbeschränkter Bereich sein, welcher eingefriedet ist. Eine Einfriedung kann beispielsweise einen Zaun, eine Mauer und/oder eine Hecke umfassen. Ein zugangsbeschränkte räumliche Bereich 102 kann beispielsweise in eine Mehrzahl räumlicher Abschnitte 106 unterteilt sein, welche selbst jeweils bestimmungsgemäß nur über ein oder mehrere Ein- bzw. Ausgänge 108 betretbar sind.

Das UWB-Überwachungssystem 100 umfasst die Mehrzahl von über den räumlichen Bereich 102 verteilten UWB-Sensoren 110, 110'. Ferner sind die UWB-Sensoren 110, 110' für ein Übertragen der erfassten Sensordaten mittels UWB, d.h. über ein von dem UWB-Überwachungssystem 100 bereitgestellten UWB-Netzwerk, bei einem Ausfall des lokalen kabelgebundenen Netzwerks konfiguriert. Hierbei können ein oder mehrere der UWB-Sensoren 110, 110' als UWB-Transceiver 111 zum Weiterleiten von UWB-Übertragungssignalen innerhalb des Überwachungssystem 100 konfiguriert sein. Ferner kann das UWB-Überwachungssystem 100 zusätzlich zu den UWB-Sensoren 110, 110' ein oder mehrere UWB-Transceiver 111 umfassen, welche zum Weiterleiten der UWB-Übertragungssignale konfiguriert sind. Das von dem Überwachungssystem 100 implementierte UWB-Netzwerk ist beispielsweise ein digitales Funknetzwerk mit einer Mesh-Topologie, welches zum Übertragen der erfassten Sensordaten unter Verwendung von UWB konfiguriert ist. Beispielsweise erfolgt eine Übertragung von Sensordaten innerhalb des UWB-basierten Funknetzwerks mit Mesh-Topologie unter Verwendung eines positionsbasierten Routingverfahrens. Beispielsweise kann auch eine UWB-Radarfunktionalität für die Detektion von Personen eingebunden und/oder implementiert werden, welche keinen UWB-Token tragen.

Die UWB-Sensoren 110 und/oder 110' umfassen beispielsweise Anonymisierungsfilter, welche dazu konfiguriert sind, die erfassten Sensordaten zu filtern. Im Zuge des Filterns werden personenbezogene Sensordaten anonymisiert. Personenbezogene Sensordaten umfassen beispielsweise Bilddaten, auf welche Personen identifizierbar sind. Die gefilterten Sensordaten werden beispielweise über das UWB-Netzwerk an einen zentralen oder abgesetzten Steuerungsserver 116 übertragen. Der zentralen oder abgesetzten Steuerungsserver 116 ist beispielsweise dazu konfiguriert die von den UWB-Sensoren 110, 110' erfassten Sensordaten auszuwerten zum Detektieren von Ausnahmeereignissen, wie etwa einer Gefahrensituation oder einem unberechtigten Zutritt zu dem räumlichen Bereich 102. Auf das Detektieren eines Ausnahmeereignisses hin, wird das Anonymisierens der personenbezogene Sensordaten zeitlich begrenzt ausgesetzt. Nach Ausführungsformen können die Steuerungsmodule der UWB-Sensoren 110' dazu konfiguriert sein, die erfassten Sensordaten auszuwerten zum Detektieren von Ausnahmeereignissen.

Der zentrale oder abgesetzte Steuerungsserver 116 ist beispielsweise ferner dazu konfiguriert Anfragen nach erfassten Sensordaten zu empfangen, Berechtigungsnachweise zum Zugriff auf die entsprechenden Sensordaten zu prüfen und im Falle einer erfolgreichen Prüfung Zugriff auf die angefragten Sensordaten zu gewähren. Im Falle eines detektierten Ausnahmeereignisses wird beispielsweise auch ein Zugriff auf personenbezogene Sensordaten gewährt, deren Anonymisierung vorübergehend ausgesetzt ist. Die Berechtigungsnachweise können beispielsweise auf Berechtigungszertifikaten und/oder Berechtigungsprofilen der Anfragenden basieren, welche Zugriffsberechtigungen der Anfragenden definieren. In einem Nutzer und/oder UWB-Token zugeordneten Berechtigungsprofil sind beispielsweise sämtliche einem und/oder UWB-Token zugeordneten Zugriffsberechtigungen gespeichert. Der Umfang der gewährten Zugriffsberechtigung kann nach Ausführungsformen beispielsweise davon abhängen, ob eine Ausnahmesituation detektiert wird. Nach Ausführungsformen können die Steuerungsmodule der UWB-Sensoren 110' Steuerfunktionen umfassen, welche dazu konfiguriert sind ein oder mehrere der Funktionen des zentralen oder abgesetzten Steuerungsservers 116 durch die entsprechenden Steuerungsmodule auszuführen.

Das Überwachungssystem 100 kann ferner dazu konfiguriert sein unter Verwendung von UWB-Sensoren 110, 110' UWB-Token 112 innerhalb des räumlichen Bereiches 102 zu lokalisieren. Hierzu werden beispielsweise UBW-Lokalisierungssignale 107 verwendet, welche von den UWB-Antennen 110, 110' an die entsprechenden UWB-Token 112 gesendet werden und umgekehrt. Anhand von Laufzeitunterschieden der übertragenen Signale können beispielsweise mittels Triangulation die relativen Positionen der UBW-Token 112 zu den UWB-Antennen der festinstallierten UWB-Sensoren 110, 110' und somit die Positionen der UBW-Token 112 in dem räumlichen Bereich 102 präzise bestimmt werden. Da die übertragenen UBW-Lokalisierungssignale 107 ohne Kenntnis der verwendeten UWB-Kodierung kaum von Hintergrundrauschen zu unterscheiden sind und somit effektiv obfuskiert werden, können Versuche einer unberechtigten Lokalisierung der UWB-Token 112 im Zuge von unerlaubten Ausspähversuchen effektiv verhindert werden. Dies wird zusätzlich unterstützt durch die verhältnismäßig kurze Reichweite der UWB-Signale, welche Ausspähversuche aus der Ferne effektiv kontern. Die UWB-Token 112 kennzeichnen beispielsweise Nutzer bzw. Träger mit Zugangsberechtigung zu dem räumlichen Bereich 102, falls es sich bei diesem um einen zugangsbeschränkten räumlichen Bereich handelt. Ferner können die UWB-Token 112 trägerspezifische Zugangsberechtigungen definieren, falls für einzelne räumliche Abschnitte des räumlichen Bereiches 102 unterschiedliche Zugangsberechtigungen notwendig sind. Anhand der UWB-Token 112 kann somit bestimmt werden, wo sich zugangsberechtigte Personen aufhalten. Falls Personen detektiert werden, welchen kein UWB-Token 112 zugeordnet werden kann, ist dies ein Hinweis auf einen Versuch eines unberechtigten Eindringens, welcher beispielsweise als ein Ausnahmeereignis detektiert wird. Nach Ausführungsformen ist der zentrale oder abgesetzte Steuerungsserver 116 zum Ausführen der Lokalisierung der UWB-Token 112 durch Triangulation der von den UWB-Sensoren 110, 110' erfassten Sensordaten konfiguriert. Nach Ausführungsformen sind die Steuermodule jeweils dazu konfiguriert, beispielsweise innerhalb der individuellen Zellen, die Lokalisierung der UWB-Token 112 durch Triangulation der von den UWB-Sensoren 110, 110' erfassten Sensordaten auszuführen.

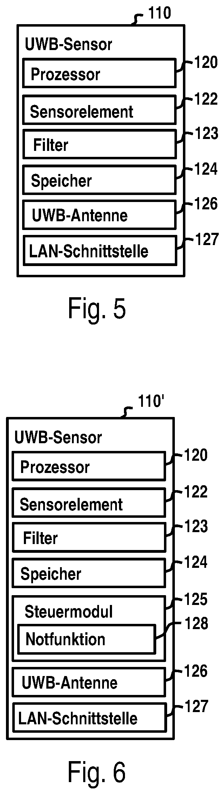

Figur 5 zeigt einen exemplarischen UBW-Sensor 110. Dieser UBW-Sensor 110 umfasst einen Prozessor 120, welcher Programminstruktionen ausführt, die beispielsweise in einem Speicher 124 des UBW-Sensor 110 gespeichert sind, und den UBW-Sensor 110 gemäß den Programminstruktionen steuert. Der UBW-Sensor 110 umfasst ferner ein Sensorelement 122, welches beispielsweise zum Erfassen optischer, akustischer, chemischer, thermischer, elektromagnetischer und/oder vibrationsbasierter Sensordaten konfiguriert ist. Die erfassten Sensordaten können beispielsweise in Abhängigkeit des verwendeten Sensorelements 122 personenbezogene Sensordaten umfassen. Falls der UWB-Sensor 110 zum Erfassen personenbezogene Sensordaten konfiguriert ist, umfasst der UWB-Sensor 110 ferner einen Anonymisierungsfilter zum Anonymisieren der personenbezogene Sensordaten, andernfalls nicht. Das Anonymisieren kann beispielsweise ein Löschen der erfassten personenbezogene Sensordaten von dem Speicher 124 umfassen. Ferner kann das Anonymisieren beispielsweise ein Verschlüsseln der erfassten personenbezogene Sensordaten umfassen. Der UWB-Sensor 110 umfasst eine LAN-Schnittstelle 127, über welche der UWB-Sensor 110 an ein Lan-Netzwerk angeschlossen ist. Schließlich umfasst der UWB-Sensor 110 eine UWB-Antenne 126 zum Senden und Empfangen von Daten mittels UWB.

Figur 6 zeigt einen exemplarischen UBW-Sensor 110', welcher zusätzlich ein Steuermodul 125 mit einer Notfunktion 124 umfasst. Die Notfunktion 124 umfasst Steuerungsfunktionen, deren Ausführen durch den Prozessor 120 den UBW-Sensor 110' dazu veranlasst zumindest einen Teil des UWB-Überwachungssystems unter Verwendung des UWB-Mesh-Netzwerks zu betreiben bzw. dessen Betrieb zu steuern. Ansonsten ist der UBW-Sensor 110' beispielsweise identisch mit dem UBW-Sensor 110 der Figur 5.

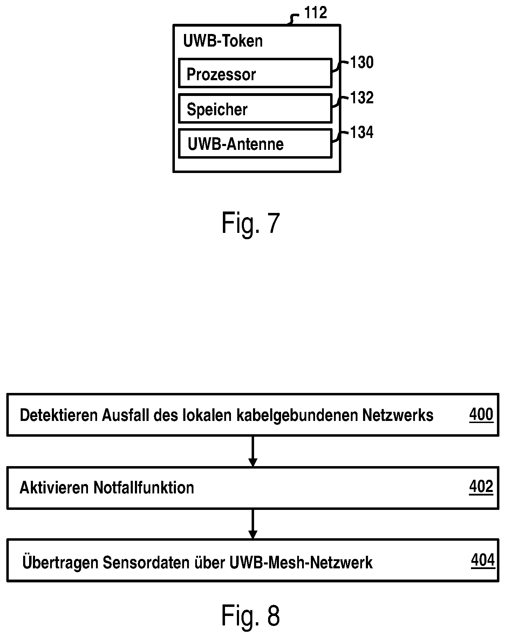

Figur 7 zeigt einen exemplarischen UBW-Token 112, welcher einen Prozessor 130, einen Speicher 132 und eine UWB-Antenne 134 umfasst. Der Prozessor 130 ist dazu konfiguriert durch Ausführen von Programminstruktionen, welche beispielsweise in dem Speicher 132 gespeichert sind, den UBW-Token 112 zu steuern. In dem Speicher 132 kann ferner eine Token-ID gespeichert sein. Der UBW-Token 112 ist dazu konfiguriert über die UWB-Antenne 134 UWB-Signale zu senden und zu empfangen. Beispielsweise sendet der UBW-Token 112 UWB-Signale, welche einen Zeitstempel und/oder die Token-ID umfassen. Anhand dieser UWB-Signale des UBW-Tokens 112 oder UWB-Signalen von UWB-Antennen bzw. UWB-Sensoren 110, 110' des UWB-Überwachungssystems 100 kann der UBW-Token 112 durch das UWB-Überwachungssystems 100 lokalisiert und/oder identifiziert werden.

Figur 8 zeigt ein exemplarisches Verfahren zum Steuern eines UWB-Überwachungssystems. In Block 400 wird ein Ausfall des lokalen kabelgebundenen Netzwerks detektiert. In Block 402 wird die Notfallfunktion aktiviert. Durch Aktivieren der Notfallfunktion wird beispielsweise ein ausgefallener Teil des lokalen kabelgebundenen Netzwerks oder das gesamte lokale kabelgebundene Netzwerk durch ein UWB-Mesh-Netzwerk ersetzt. In Block 404 werden erfasste Sensordaten über das UWB-Mesh-Netzwerk übertragen. Ein lokales Auswerten der Sensordaten kann dabei beispielsweise Steuerungsmodule der UWB-Sensoren erfolgen.

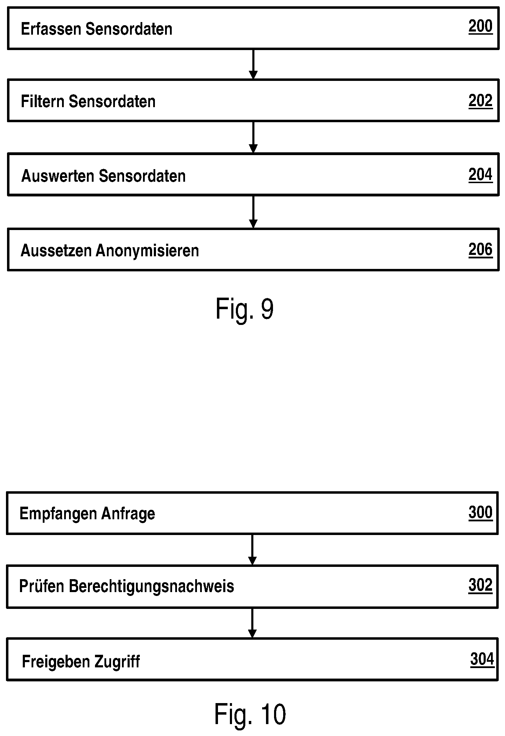

Figur 9 zeigt ein exemplarisches Verfahren zum Steuern eines UWB-Überwachungssystems. In Block 200 werden Sensordaten in einem räumlichen Bereich durch UWB-Sensoren des UWB-Überwachungssystems erfasst. Die erfassten Sensordaten können personenbezogene Sensordaten umfassen. In Block 202 werden die erfassten Sensordaten unter Verwendung von Anonymisierungsfiltern der UWB-Sensoren gefiltert. Dabei werden personenbezogene Sensordaten anonymisiert. Ein solches Anonymisieren umfasst beispielsweise ein Löschen oder Verschlüsseln der zu anonymisierenden Sensordaten. In Block 204 werden die erfassten und gefilterten Sensordaten zum Detektieren eines Ausnahmeereignisses ausgewertet. Dies erfolgt beispielsweise durch ein zentrales oder dezentrales Steuerserver des UWB-Überwachungssystems oder durch ein Steuermodul eines der UWB-Sensoren. In Block 206 wird auf ein Detektieren eines Ausnahmeereignisses hin, ein zeitlich begrenztes Aussetzen des Anonymisierens der personenbezogene Sensordaten beispielsweise durch das den Steuerungsserver oder das Steuermodul veranlasst.

Figur 10 zeigt ein exemplarisches Verfahren zum Steuern eines UWB-Überwachungssystems. In Block 300 empfängt das UWB-Überwachungssystem, beispielsweise der Steuerungsserver oder ein Steuermodul des UWB-Überwachungssystems, eine Anfrage zum Freigeben von erfassten Sensordaten. In Block 302 wird, beispielsweise durch den Steuerungsserver oder das Steuermodul, eine von der Anfrage umfasster Berechtigungsnachweis zum Zugriff auf die angefragte Sensordaten geprüft. Bei dem Berechtigungsnachweis kann es sich beispielsweise um ein Berechtigungszertifikat handeln oder um einen Identifikator eines hinterlegten Berechtigungsprofils des Anfragenden. In Block 304 wird auf eine erfolgreiche Prüfung des Berechtigungsnachweises hin, ein Zugriff auf die angefragten Sensordaten freigegeben. Beispielsweise werden die angefragten Sensordaten an den Anfragenden gesendet oder auf einer lokalen Anzeigevorrichtung des Überwachungssystems angezeigt.

### Bezugszeichenliste

- 100: UWB-Überwachungssystem
- 102: räumlicher Bereich
- 104: Zugang/Ausgang
- 106: räumlicher Abschnitt
- 108: Zugang/Ausgang
- 107: UWB-Lokalisierungssignal
- 110: UWB-Sensor
- 110': UWB-Sensor
- 111: UWB-Transceiver
- 112: UWB-Token
- 113: LAN-Verbindung
- 114: UWB-Verbindung
- 116: Steuerungsserver
- 120: Prozessor
- 122: Sensorelement
- 123: Filter
- 125: Steuermodul
- 124: Speicher
- 126: UWB-Antenne
- 127: LAN-Schnittstelle
- 128: Notfunktion
- 130: Prozessor
- 132: Speicher
- 134: UWB-Antenne

## Patentansprüche

1. UWB-Überwachungssystem (100) zur Überwachung eines räumlichen Bereiches (102), wobei das UWB-Überwachungssystem (100) eine Mehrzahl von UWB-Sensoren (110, 110') umfasst, welche in dem räumlichen Bereich (102) verteilt angeordnet sind, wobei die UWB-Sensoren (110, 110') für ein Erfassen von Sensordaten konfiguriert sind, wobei die UWB-Sensoren (110, 110') ferner für eine kabellose UWB-Kommunikation konfiguriert sind,
wobei ein oder mehrere der UWB-Sensoren (110, 110') zur Übertragung erfasster Sensordaten an ein lokales kabelgebundenes Netzwerk mit einem zentralen oder abgesetzten Steuerungsserver (116) zum Steuern des Betriebs des UWB-Überwachungssystems (100) angeschlossen sind,
wobei die UWB-Sensoren (110, 110') ferner dazu konfiguriert sind, ein UWB-Mesh-Netzwerk mit einer vermaschten Netzwerktopologie als ein zu dem lokalen kabelgebundenen Netzwerk zumindest teilweise redundantes kabelloses Netzwerk bereitzustellen, wobei ein oder mehrere der UWB-Sensoren (110') jeweils ein Steuermodul (125) mit einer Notfunktion (128) umfassen, wobei die Notfunktion (128) Steuerungsfunktionen zumindest zum lokalen Betrieb eines Teils des UWB-Überwachungssystems (100) unter Verwendung des UWB-Mesh-Netzwerks umfasst,
wobei das UWB-Überwachungssystem (100) dazu konfiguriert ist, auf einen Ausfall des lokalen kabelgebundenen Netzwerks hin, die Notfunktion (128) der UWB-Sensoren (110') zum lokalen Betrieb des UWB-Überwachungssystems (100) unter Verwendung des UWB-Mesh-Netzwerks zu aktivieren und erfasste Sensordaten mittels UWB über das UWB-Mesh-Netzwerk zu übertragen,
wobei die Steuermodule (125) jeweils dazu konfiguriert sind, unter Verwendung der Steuerfunktionen des Steuermoduls (125) den lokalen Betrieb des UWB-Überwachungssystems (100) innerhalb einer eigenständigen Zelle des UWB-Mesh-Netzwerks aufrecht zu erhalten, wobei die jeweilige Zelle den UWB-Sensoren (110') mit dem entsprechenden Steuermodul (125) und ein oder mehrere weitere UWB-Sensoren (110) der Mehrzahl von UWB-Sensoren (110, 110') ohne Steuermodule (125) umfasst,
wobei die Steuermodule (125) unter Verwendung der Steuerungsfunktionen ferner jeweils zum Auswerten von Sensordaten konfiguriert sind, welche durch ein oder mehrere UWB-Sensoren (110, 110') der Zelle erfasst werden, welche den UWB-Sensor (110') mit dem entsprechenden Steuermodul (125) umfasst.

2. UWB-Überwachungssystem (100) nach Anspruch 1, wobei die Steuermodule (125) unter Verwendung der Steuerungsfunktionen ferner jeweils zu einem Datenaustausch mit ein oder mehr benachbarten Zellen konfiguriert sind.

3. UWB-Überwachungssystem (100) nach Anspruch 2, wobei das UWB-Mesh-Netzwerks ein oder mehrere Zellverbünde umfasst, welche jeweils eine Mehrzahl von Zellen umfassen.

4. UWB-Überwachungssystem (100) nach Anspruch 3, wobei ein oder mehrere Steuermodule (125) unter Verwendung der Steuerungsfunktionen ferner zum Auswerten von Sensordaten konfiguriert sind, welche durch ein oder mehrere UWB-Sensoren (110, 110') verschiedener Zellen des Zellverbunds erfasst werden, welcher den UWB-Sensor (110') mit dem entsprechenden Steuermodul (125) umfasst.

5. UWB-Überwachungssystem (100) nach einem der vorangehenden Ansprüche, wobei die Steuermodule (125) unter Verwendung der Steuerungsfunktionen ferner zu einem globalen Betrieb des gesamten UWB-Überwachungssystems (100) unter Verwendung des UWB-Mesh-Netzwerks konfiguriert sind,
wobei das von den UWB-Sensoren (110, 110') bereitgestellte UWB-Mesh-Netzwerk beispielsweise ein zu dem gesamten lokalen kabelgebundenen Netzwerk redundantes kabelloses Netzwerk ist, und/oder
wobei ein oder mehrere der Steuermodule (125) dazu konfiguriert sind, den zentralen oder abgesetzten Steuerungsserver (116) zu ersetzen, und/oder
wobei zumindest die Steuermodule (125) ortsgebundenen Informationen zur bevorzugten Transportrichtung von Daten durch das Mesh Netzwerk aufgrund vorhandener Richtungsvektoren und/oder Positionsdaten umfassen.

6. UWB-Überwachungssystem (100) nach einem der vorangehenden Ansprüche, wobei das UWB-Überwachungssystem (100) zusätzlich zu den UWB-Sensoren (110, 110') ein oder mehrere UWB-Transceiver (111) umfasst, welche zum Weiterleiten der UWB-Übertragungssignale innerhalb des UWB-Mesh-Netzwerks konfiguriert sind, und/oder
wobei ein oder mehrere der UWB-Sensoren (110, 110') als UWB-Transceiver (111) zum Weiterleiten von UWB-Übertragungssignalen über das UWB-Mesh-Netzwerk an den zentralen oder abgesetzten Steuerungsserver (116) konfiguriert sind,
wobei die UWB-Transceiver (111) beispielsweise ortsgebundenen Informationen zur bevorzugten Transportrichtung von Daten durch das Mesh Netzwerk aufgrund vorhandener Richtungsvektoren und/oder Positionsdaten umfassen.

7. UWB-Überwachungssystem (100) nach einem der vorangehenden Ansprüche, wobei die Mehrzahl von UWB-Sensoren (110, 110') eine Mehrzahl von Lokalisierungssensoren umfasst, welche zur Positionsbestimmung von UWB-Token (112) innerhalb des räumlichen Bereiches (102) konfiguriert sind, wobei die Positionsbestimmung unter Verwendung von Laufzeitmessungen von UWB-Signalen zwischen UWB-Token (112) und Lokalisierungssensoren erfolgt,
wobei das UWB-Überwachungssystem (100) beispielsweise einen Aktivierungscode sendet, wobei die UWB-Token (112) jeweils bei Eintritt in eine Sendereichweite des UWB-Überwachungssystems (100) auf einen Empfang des Aktivierungscodes hin aktiviert und bei Verlassen der Sendereichweite des UWB-Überwachungssystems (100) auf ein Ausbleiben des Empfangs des Aktivierungscodes hin deaktiviert werden.

8. UWB-Überwachungssystem (100) nach einem der vorangehenden Ansprüche, wobei das UWB-Überwachungssystem (100) ferner konfiguriert ist zum
• Erfassen von Sensordaten, welche personenbezogene Sensordaten umfassen, in dem räumlichen Bereich (102) unter Verwendung der UWB-Sensoren (110, 110'),
• Filtern der erfassten Sensordaten unter Verwendung eines Anonymisierungsfilters (123), wobei der Anonymisierungsfilter dazu konfiguriert ist, die personenbezogenen Sensordaten zu anonymisieren,
• Auswerten der erfassten Sensordaten zum Detektieren eines Ausnahmeereignisses,
• auf das Detektieren des Ausnahmeereignisses hin, zeitlich begrenzten Aussetzen des Anonymisierens der personenbezogene Sensordaten.

9. UWB-Überwachungssystem (100) nach Anspruch 8, wobei das Detektieren des Ausnahmeereignisses ein Erfassen des Ausfalls des lokalen kabelgebundenen Netzwerks umfasst und/oder
wobei das Anonymisieren durch den Anonymisierungsfilter ein Löschen zumindest eines Teils der personenbezogenen Sensordaten umfasst, wobei das zeitlich begrenzte Aussetzen des Anonymisierens ein Speichern der personenbezogener Sensordaten umfasst, welche innerhalb eines begrenzten Zeitfensters erfasst werden, und/oder
wobei das Anonymisieren durch den Anonymisierungsfilter ein Verschlüsseln zumindest eines Teils der personenbezogenen Sensordaten umfasst, wobei das zeitlich begrenzte Aussetzen des Anonymisierens ein zeitlich begrenztes Bereitstellen der entsprechenden personenbezogenen Sensordaten in unverschlüsselter Form umfasst,
wobei das Bereitstellen der personenbezogenen Sensordaten in unverschlüsselter Form beispielsweise ein Aussetzen des Verschlüsselns der personenbezogenen Sensordaten umfasst, welche innerhalb eines begrenzten Zeitfensters erfasst werden, oder wobei das Bereitstellen der personenbezogenen Sensordaten in unverschlüsselter Form beispielsweise ein Entschlüsseln verschlüsselter personenbezogenen Sensordaten umfasst, welche innerhalb des begrenzten Zeitfensters erfasst werden, und/oder
wobei das UWB-Überwachungssystem (100) ferner konfiguriert ist zum
• Empfangen einer Anfrage zum Freigeben von erfassten Sensordaten,
• Prüfen eines von der Anfrage umfassten Berechtigungsnachweises zum Zugriff auf die angefragte Sensordaten,
• auf eine erfolgreiche Prüfung des Berechtigungsnachweises hin, Freigeben des Zugriffs auf die angefragten Sensordaten,
wobei im Falle des Freigebens der angefragten Sensordaten beispielsweise Art, Zeit, Ort, Empfänger und/oder Verwendung der freigegebenen Sensordaten protokolliert werden, und/oder
wobei das UWB-Überwachungssystem (100) ein oder mehrere vortrainierte Maschinenlernmodule umfasst, welche jeweils dazu trainiert sind anhand von Anomalien in den erfassten Sensordaten Ausnahmeereignisse zu erkennen.

10. UWB-Überwachungssystem (100) nach einem der Ansprüche 8 bis 9, wobei Zugangsberechtigungen zu und/oder Aufenthaltsberechtigungen in dem räumlichen Bereich (102) unter Verwendung der UWB-Token (112) nachgewiesen werden.

11. UWB-Überwachungssystem (100) nach Anspruch 10, wobei das Detektieren des Ausnahmeereignisses ein Erfassen einer Anzahl von Personen in dem räumlichen Bereich (102) unter Verwendung der UWB-Sensoren (110, 110') umfasst, welche zumindest lokal von der Anzahl der unter Verwendung der UWB-Token (112) Personen in dem räumlichen Bereich (102) erfassten Anzahl von zugangsberechtigten Personen abweicht.

12. UWB-Überwachungssystem (100) nach einem der Ansprüche 10 bis 11, wobei jedes der UWB-Token (112) jeweils einem Nutzer zugeordnet ist, wobei in den UWB-Token (112) jeweils ein oder mehrere Referenzwerte für personenbezogenen Sensordaten zum Authentifizieren des zugeordneten Nutzers gespeichert sind,
wobei der Nachweis einer Zugangsberechtigung und/oder Aufenthaltsberechtigung unter Verwendung eines der UWB-Token (112) ein Bestätigen eines Authentifizierens des dem entsprechenden UWB-Token (112) zugeordneten Nutzers durch das UWB-Token (112) umfasst, wobei das Authentifizieren durch das UWB-Token (112) ein lokales Validieren von personenbezogenen Sensordaten durch das UWB-Token (112) unter Verwendung der in dem UWB-Token (112) gespeicherten ein oder mehreren Referenzwerten umfasst.

13. Verfahren zum Steuern eines UWB-Überwachungssystems (100) zur Überwachung eines räumlichen Bereiches (102), wobei das UWB-Überwachungssystem (100) eine Mehrzahl von UWB-Sensoren (110, 110') umfasst, welche in dem räumlichen Bereich (102) verteilt angeordnet sind, wobei die UWB-Sensoren (110, 110') für ein Erfassen von Sensordaten konfiguriert sind, wobei die UWB-Sensoren (110, 110') ferner für eine kabellose UWB-Kommunikation konfiguriert sind,
wobei ein oder mehrere der UWB-Sensoren (110, 110') zur Übertragung erfasster Sensordaten an ein lokales kabelgebundenes Netzwerk mit einem zentralen oder abgesetzten Steuerungsserver (116) zum Steuern des Betriebs des UWB-Überwachungssystems (100) angeschlossen sind,
wobei die UWB-Sensoren (110, 110') ferner dazu konfiguriert sind, ein UWB-Mesh-Netzwerk mit einer vermaschten Netzwerktopologie als ein zu dem lokalen kabelgebundenen Netzwerk zumindest teilweise redundantes kabelloses Netzwerk bereitzustellen, wobei ein oder mehrere der UWB-Sensoren (110') jeweils ein Steuermodul (125) mit einer Notfunktion (128) umfassen, wobei die Notfunktion (128) Steuerungsfunktionen zumindest zum lokalen Betrieb eines Teils des UWB-Überwachungssystems (100) unter Verwendung des UWB-Mesh-Netzwerks umfasst,
wobei das Verfahren umfasst
auf einen Ausfall des lokalen kabelgebundenen Netzwerks hin, Aktivieren der Notfunktion (128) der UWB-Sensoren (110') zum lokalen Betrieb des UWB-Überwachungssystems (100) unter Verwendung des UWB-Mesh-Netzwerks,
Übertragen erfasster Sensordaten mittels UWB über das UWB-Mesh-Netzwerk,
wobei die Steuermodule (125) jeweils, unter Verwendung der Steuerfunktionen des Steuermoduls (125) den lokalen Betrieb des UWB-Überwachungssystems (100) innerhalb einer eigenständigen Zelle des UWB-Mesh-Netzwerks aufrecht erhalten, wobei die jeweilige Zelle den UWB-Sensoren (110') mit dem entsprechenden Steuermodul (125) und ein oder mehrere weitere UWB-Sensoren (110) der Mehrzahl von UWB-Sensoren (110, 110') ohne Steuermodule (125) umfasst,
wobei die Steuermodule (125) unter Verwendung der Steuerungsfunktionen ferner jeweils die Sensordaten auswerten, welche durch ein oder mehrere UWB-Sensoren (110, 110') der Zelle erfasst werden, welche den UWB-Sensor (110') mit dem entsprechenden Steuermodul (125) umfasst.

## Claims

1. A UWB monitoring system (100) for monitoring a spatial area (102), wherein the UWB monitoring system (100) comprises a plurality of UWB sensors (110, 110') distributed in the spatial area (102), wherein the UWB sensors (110, 110') are configured for detecting sensor data, wherein the UWB sensors (110, 110') are further configured for wireless UWB communication,
wherein one or more of the UWB sensors (110, 110') are connected for transmitting detected sensor data to a local wired network with a central or remote control server (116) for controlling the operation of the UWB monitoring system (100),
wherein the UWB sensors (110, 110') are further configured to provide a UWB mesh network with a meshed network topology as a wireless network that is at least partially redundant to the local wired network, wherein one or more of the UWB sensors (110') each comprise a control module (125) with an emergency function (128), wherein the emergency function (128) comprises control functions at least for local operation of a part of the UWB monitoring system (100) using the UWB mesh network,
wherein the UWB monitoring system (100) is configured to activate the emergency function (128) of the UWB sensors (110') to locally operate the UWB monitoring system (100) using the UWB mesh network and to transmit detected sensor data by means of UWB via the UWB mesh network,
wherein the control modules (125) are each configured to maintain local operation of the UWB monitoring system (100) within an independent cell of the UWB mesh network using the control functions of the control module (125), wherein the respective cell comprises the UWB sensors (110') with the corresponding control module (125) and one or more further UWB sensors (110) of the plurality of UWB sensors (110, 110') without control modules (125),
wherein the control modules (125) are further configured, using the control functions, to evaluate sensor data which is detected by one or more UWB sensors (110, 110') of the cell which comprises the UWB sensor (110') with the corresponding control module (125).

2. The UWB monitoring system (100) according to claim **1,** wherein the control modules (125) are further configured to exchange data with one or more adjacent cells using the control functions.

3. The UWB monitoring system (100) according to claim **2,** wherein the UWB mesh network comprises one or more cell groups, each comprising a plurality of cells.

4. The UWB monitoring system (100) according to claim **3,** wherein one or more control modules (125) are further configured to evaluate sensor data using the control functions, which sensor data is detected by one or more UWB sensors (110, 110') of different cells of the cell group comprising the UWB sensor (110') with the corresponding control module (125).

5. The UWB monitoring system (100) according to any one of the preceding claims, wherein the control modules (125) are further configured to use the control functions to globally operate the entire UWB monitoring system (100) using the UWB mesh network,
wherein the UWB mesh network provided by the UWB sensors (110, 110') is a wireless network that is redundant to the entire local wired network, and/or
wherein one or more of the control modules (125) are configured to replace the central or remote control server (116), and/or
wherein at least the control modules (125) comprise location-based information on the preferred transport direction of data through the mesh network on the basis of existing direction vectors and/or position data.

6. The UWB monitoring system (100) according to any one of the preceding claims, wherein the UWB monitoring system (100) comprises, in addition to the UWB sensors (110, 110'), one or more UWB transceivers (111) which are configured to forward the UWB transmission signals within the UWB mesh network, and/or
wherein one or more of the UWB sensors (110, 110') are configured as UWB transceivers (111) for forwarding UWB transmission signals via the UWB mesh network to the central or remote control server (116),
wherein the UWB transceivers (111), for example, comprise location-based information on the preferred transport direction of data through the mesh network on the basis of existing direction vectors and/or position data.

7. The UWB monitoring system (100) according to one of the preceding claims, wherein the plurality of UWB sensors (110, 110') comprise a plurality of localisation sensors which are configured to determine the position of UWB tokens (112) within the spatial area (102), wherein the position is determined using time-of-flight measurements of UWB signals between UWB tokens (112) and localisation sensors,
wherein the UWB monitoring system (100), for example, transmits an activation code, wherein the UWB tokens (112) are each activated upon entering a transmission range of the UWB monitoring system (100) in response to receipt of the activation code and are deactivated upon leaving the transmission range of the UWB monitoring system (100) in response to non-receipt of the activation code.

8. The UWB monitoring system (100) according to any one of the preceding claims, wherein the UWB monitoring system (100) is further configured to
• detect sensor data comprising personal sensor data in the spatial area (102) using the UWB sensors (110, 110'),
• filter the detected sensor data using an anonymisation filter (123), wherein the anonymisation filter is configured to anonymise the personal sensor data,
• evaluate the recorded sensor data to detect an exceptional event,
• upon detection of the exceptional event, temporarily suspend the anonymisation of the personal sensor data.

9. The UWB monitoring system (100) according to claim **8,** wherein detecting the exceptional event comprises detecting the failure of the local wired network, and/or
wherein the anonymisation by the anonymisation filter comprises deleting at least part of the personal sensor data, wherein the temporary suspension of anonymisation comprises storing the personal sensor data captured within a limited time window, and/or
wherein the anonymisation by the anonymisation filter comprises encrypting at least part of the personal sensor data, wherein the temporary suspension of the anonymisation comprises temporarily providing the corresponding personal sensor data in decrypted form,
wherein the provision of the personal sensor data in decrypted form comprises, for example, suspending the encryption of the personal sensor data captured within a limited time window, or wherein the provision of the personal sensor data in decrypted form comprises, for example, decrypting encrypted personal sensor data captured within the limited time window, and/or
wherein the UWB monitoring system (100) is further configured to
• receive a request to release captured sensor data,
• check a credential included in the request for access to the requested sensor data,
• upon successful verification of the credential, release access to the requested sensor data,
wherein, in the event of the requested sensor data being released, the type, time, location, recipient and/or use of the released sensor data are logged, for example, and/or
wherein the UWB monitoring system (100) comprises one or more pre-trained machine learning modules, each of which is trained to detect exceptional events on the basis of anomalies in the captured sensor data.

10. The UWB monitoring system (100) according to any one of claims 8 to **9,** wherein access authorisations to and/or presence authorisations in the spatial area (102) are verified using the UWB tokens (112).

11. The UWB monitoring system (100) according to claim 10, wherein detecting the exception event comprises detecting a number of persons in the spatial area (102) using the UWB sensors (110, 110') which differs at least locally from the number of authorised persons detected in the spatial area (102) using the UWB tokens (112).

12. The UWB monitoring system (100) according to any one of claims 10 to 11, wherein each of the UWB tokens (112) is assigned to a respective user, wherein the UWB tokens (112) each store one or more reference values for personal sensor data for authenticating the assigned user,
wherein the verification of access authorisation and/or presence authorisation using one of the UWB tokens (112) comprises confirming authentication of the user assigned to the corresponding UWB token (112) by the UWB token (112), wherein the authentication by the UWB token (112) comprises local validation of personal sensor data by the UWB token (112) using the one or more reference values stored in the UWB token (112).

13. A method for controlling a UWB monitoring system (100) for monitoring a spatial area (102), wherein the UWB monitoring system (100) comprises a plurality of UWB sensors (110, 110') which are distributed in the spatial area (102), wherein the UWB sensors (110, 110') are configured for detecting sensor data, wherein the UWB sensors (110, 110') are further configured for wireless UWB communication,
wherein one or more of the UWB sensors (110, 110') are connected for transmitting detected sensor data to a local wired network with a central or remote control server (116) for controlling the operation of the UWB monitoring system (100),
wherein the UWB sensors (110, 110') are further configured to provide a UWB mesh network with a meshed network topology as a wireless network that is at least partially redundant to the local wired network, wherein one or more of the UWB sensors (110') each comprise a control module (125) with an emergency function (128), wherein the emergency function (128) comprises control functions at least for local operation of a part of the UWB monitoring system (100) using the UWB mesh network,
wherein the method comprises,
upon failure of the local wired network, activating the emergency function (128) of the UWB sensors (110') for local operation of the UWB monitoring system (100) using the UWB mesh network,
transmitting captured sensor data by means of UWB via the UWB mesh network,
wherein the control modules (125) are each configured to maintain local operation of the UWB monitoring system (100) within an independent cell of the UWB mesh network using the control functions of the control module (125), wherein the respective cell comprises the UWB sensors (110') with the corresponding control module (125) and one or more further UWB sensors (110) of the plurality of UWB sensors (110, 110') without control modules (125),
wherein the control modules (125) are further configured, using the control functions, to evaluate sensor data which is captured by one or more UWB sensors (110, 110') of the cell which comprises the UWB sensor (110') with the corresponding control module (125).

## Revendications

1. Système de surveillance UWB (100) destiné à surveiller une zone d'espace (102), dans lequel le système de surveillance UWB (100) comprend une pluralité de capteurs UWB (110, 110') distribués dans la zone d'espace (102), dans lequel les capteurs UWB (110, 110') sont configurés pour détecter des données de capteur, dans lequel les capteurs UWB (110, 110') sont en outre configurés pour une communication UWB sans fil,
dans lequel un ou plusieurs des capteurs UWB (110, 110') sont connectés pour émettre des données de capteur détectées à un réseau filaire local avec un serveur central ou commandé à distance (116) afin de commander le fonctionnement du système de surveillance UWB (100),
dans lequel les capteurs UWB (110, 110') sont en outre configurés pour fournir un réseau de mailles UWB avec une topologie de réseau maillé en tant que réseau sans fil qui est au moins partiellement redondant vis-à-vis du réseau filaire local, dans lequel un ou plusieurs des capteurs UWB (110') comprennent chacun un module de commande (125) avec une fonction d'urgence (128), dans lequel la fonction d'urgence (128) comprend des fonctions de commande au moins pour le fonctionnement local d'une partie du système de surveillance UWB (100) en utilisant le réseau de mailles UWB,
dans lequel le système de surveillance UWB (100) est configuré pour activer la fonction d'urgence (128) des capteurs UWB (110') pour faire fonctionner localement le système de surveillance UWB (100) en utilisant le réseau de mailles UWB et pour émettre les données de capteur détectées au moyen d'UWB par l'intermédiaire du réseau de mailles UWB,
dans lequel les modules de commande (125) sont chacun configurés pour maintenir le fonctionnement local du système de surveillance UWB (100) au sein d'une cellule indépendante du réseau de mailles UWB en utilisant les fonctions de commande du module de commande (125), dans lequel la cellule respective comprend les capteurs UWB (110') avec le module de commande (125) correspondant et un ou plusieurs capteurs UWB (110) de la pluralité de capteurs UWB (110, 110') sans modules de commande (125),
dans lequel les modules de commande (125) sont en outre configurés, en utilisant les fonctions de commande, pour évaluer des données de capteur qui sont détectées par un ou plusieurs capteurs UWB (110, 110') de la cellule qui comprend le capteur UWB (110') avec le module de commande (125) correspondant.

2. Système de surveillance UWB (100) selon la revendication 1, dans lequel les modules de commande (125) sont en outre configurés pour échanger des données avec une ou plusieurs cellules adjacentes en utilisant les fonctions de commande.

3. Système de surveillance UWB (100) selon la revendication 2, dans lequel le réseau de mailles UWB comprend un ou plusieurs groupes de cellules, chacun comprenant une pluralité de cellules.

4. Système de surveillance UWB (100) selon la revendication 3, dans lequel un ou plusieurs modules de commande (125) sont en outre configurés pour évaluer des données de capteurs en utilisant les fonctions de commande, lesquelles données de capteurs sont détectées par un ou plusieurs capteurs UWB (110, 110') de cellules différentes du groupe de cellules comprenant le capteur UWB (110') avec le module de commande (125) correspondant.

5. Système de surveillance UWB (100) selon l'une quelconque des revendications précédentes, dans lequel les modules de commande (125) sont en outre configurés pour utiliser les fonctions de commande afin de faire fonctionner globalement le système de surveillance UWB (100) dans son ensemble en utilisant le réseau de mailles UWB,
dans lequel le réseau de mailles UWB fourni par les capteurs UWB (110, 110') est un réseau sans fil qui est redondant vis-à-vis du réseau filaire local dans son ensemble, et/ou
dans lequel un ou plusieurs des modules de commande (125) sont configurés pour remplacer le serveur central ou commandé à distance (116), et/ou
dans lequel au moins les modules de commande (125) comprennent des informations basées sur l'emplacement relatives à la direction de transport préférée de données à travers le réseau de mailles sur la base de vecteurs de direction et/ou de données de position existants.

6. Système de surveillance UWB (100) selon l'une quelconque des revendications précédentes, dans lequel le système de surveillance UWB (100) comprend, en plus des capteurs UWB (110, 110'), un ou plusieurs émetteurs-récepteurs UWB (111) qui sont configurés pour transférer les signaux d'émission UWB au sein du réseau de mailles UWB, et/ou
dans lequel un ou plusieurs des capteurs UWB (110, 110') sont configurés en tant qu'émetteurs-récepteurs UWB (111) pour transférer des signaux d'émission UWB par l'intermédiaire du réseau de mailles UWB au serveur central ou commandé à distance (116),
dans lequel les émetteurs-récepteurs UWB (111), par exemple, comprennent des informations basées sur l'emplacement relatives à la direction de transport préférée de données à travers le réseau de mailles sur la base de vecteurs de direction et/ou de données de position existants.

7. Système de surveillance UWB (100) selon l'une des revendications précédentes, dans lequel la pluralité de capteurs UWB (110, 110') comprend une pluralité de capteurs de localisation qui sont configurés pour déterminer la position de jetons UWB (112) au sein de la zone d'espace (102), dans lequel la position est déterminée en utilisant des mesures de temps de vol de signaux UWB entre les jetons UWB (112) et des capteurs de localisation,
dans lequel le système de surveillance UWB (100), par exemple, émet un code d'activation, dans lequel les jetons UWB (112) sont chacun activés lors de l'entrée dans une plage d'émission du système de surveillance UWB (100) en réponse à la réception du code d'activation et sont désactivés lors de la sortie de la plage d'émission du système de surveillance UWB (100) en réponse à la non-réception du code d'activation.

8. Système de surveillance UWB (100) selon l'une quelconque des revendications précédentes, dans lequel le système de surveillance UWB (100) est en outre configuré pour
• détecter des données de capteur comprenant des données de capteur personnel dans la zone d'espace (102) en utilisant les capteurs UWB (110, 110'),
• filtrer les données de capteur détectées en utilisant un filtre d'anonymisation (123), dans lequel le filtre d'anonymisation est configuré pour anonymiser les données de capteur personnel,
• évaluer les données de capteur enregistrées pour détecter un événement exceptionnel,
• en cas de détection de l'événement exceptionnel, suspendre temporairement l'anonymisation des données de capteur personnel.

9. Système de surveillance UWB (100) selon la revendication 8, dans lequel l'étape consistant à détecter l'événement exceptionnel comprend une étape consistant à détecter l'échec du réseau filaire local, et/ou
dans lequel l'anonymisation par le filtre d'anonymisation comprend une étape consistant à supprimer au moins une partie des données de capteur personnel, dans lequel la suspension temporaire de l'anonymisation comprend une étape consistant à stocker les données de capteur personnel capturées au sein d'un intervalle de temps limité, et/ou
dans lequel l'anonymisation par le filtre d'anonymisation comprend une étape consistant à chiffrer au moins une partie des données de capteur personnel, dans lequel la suspension temporaire de l'anonymisation comprend une étape consistant à fournir temporairement les données de capteur personnel correspondantes sous forme déchiffrée,
dans lequel la fourniture des données de capteur personnel sous forme déchiffrée comprend, par exemple, une étape consistant à suspendre le chiffrement des données de capteur personnel capturées au sein d'un intervalle de temps limité, ou dans lequel la fourniture des données de capteur personnel sous forme déchiffrée comprend, par exemple, une étape consistant à déchiffrer des données de capteur personnel chiffrées capturées au sein de la fenêtre de temps limitée, et/ou
dans lequel le système de surveillance UWB (100) est en outre configuré pour
• recevoir une requête ain de libérer les données de capteur capturées,
• contrôler un élément d'authentification inclus dans la requête pour l'accès aux données de capteur requises,
• en cas de vérification réussie de l'élément d'authentification, libérer l'accès aux données de capteur requises,
dans lequel, dans le cas de la libération des données de capteur requises, le type, le temps, l'emplacement, le destinataire et/ou l'utilisation des données de capteur libérées sont consignés, par exemple, et/ou
dans lequel le système de surveillance UWB (100) comprend un ou plusieurs modules d'apprentissage machine pré-entraînés, chacun étant entraîné pour détecter des événements exceptionnels sur la base d'anomalies dans les données de capteur capturées.

10. Système de surveillance UWB (100) selon l'une quelconque des revendications 8 à 9, dans lequel les autorisations d'accès à et/ou les autorisations de présence dans la zone d'espace (102) sont vérifiées en utilisant les jetons UWB (112).

11. Système de surveillance UWB (100) selon la revendication 10, dans lequel l'étape consistant à détecter l'événement d'exception comprend une étape consistant à détecter un nombre de personnes dans la zone d'espace (102) en localement du nombre de personnes autorisées détectées dans la zone d'espace (102) en utilisant les jetons UWB (112).

12. Système de surveillance UWB (100) selon l'une quelconque des revendications 10 à 11, dans lequel chacun des jetons UWB (112) est attribué à un utilisateur respectif, dans lequel les jetons UWB (112) stockent chacun une ou plusieurs valeurs de référence pour des données de capteur personnel afin d'authentifier l'utilisateur attribué,
dans lequel la vérification de l'autorisation d'accès et/ou de l'autorisation de présence en utilisant l'un des jetons UWB (112) comprend une étape consistant à faire confirmer l'authentification de l'utilisateur attribué au jeton UWB correspondant (112) par le jeton UWB (112), dans lequel l'authentification par le jeton UWB (112) comprend la validation locale de données de capteur personnel par le jeton UWB (112) en utilisant la ou les valeurs de référence stockées dans le jeton UWB (112).

13. Procédé de commande d'un système de surveillance UWB (100) destiné à surveiller une zone d'espace (102), dans lequel le système de surveillance UWB (100) comprend une pluralité de capteurs UWB (110, 110') qui sont distribués dans la zone d'espace (102), dans lequel les capteurs UWB (110, 110') sont configurés pour détecter des données de capteur, dans lequel les capteurs UWB (110, 110') sont en outre configurés pour une communication UWB sans fil,
dans lequel un ou plusieurs des capteurs UWB (110, 110') sont connectés pour émettre des données de capteur détectées à un réseau filaire local avec un serveur central ou commandé à distance (116) afin de commander le fonctionnement du système de surveillance UWB (100),
dans lequel les capteurs UWB (110, 110') sont en outre configurés pour fournir un réseau de mailles UWB avec une topologie de réseau maillé en tant que réseau sans fil qui est au moins partiellement redondant vis-à-vis du réseau filaire local, dans lequel un ou plusieurs des capteurs UWB (110') comprennent chacun un module de commande (125) avec une fonction d'urgence (128), dans lequel la fonction d'urgence (128) comprend des fonctions de commande au moins pour le fonctionnement local d'une partie du système de surveillance UWB (100) en utilisant le réseau de mailles UWB,
dans lequel le procédé comprend les étapes consistant à,
en cas d'échec du réseau filaire local, activer la fonction d'urgence (128) des capteurs UWB (110') pour le fonctionnement local du système de surveillance UWB (100) en utilisant le réseau de mailles UWB,
émettre des données de capteur capturées au moyen d'UWB par l'intermédiaire du réseau de mailles UWB,
dans lequel les modules de commande (125) sont chacun configurés pour maintenir le fonctionnement local du système de surveillance UWB (100) au sein d'une cellule indépendante du réseau de mailles UWB en utilisant les fonctions de commande du module de commande (125), dans lequel la cellule respective comprend les capteurs UWB (110') avec le module de commande (125) correspondant et un ou plusieurs capteurs UWB (110) de la pluralité de capteurs UWB (110, 110') sans modules de commande (125),
dans lequel les modules de commande (125) sont en outre configurés, en utilisant les fonctions de commande, pour évaluer des données de capteur qui sont capturées par un ou plusieurs capteurs UWB (110, 110') de la cellule qui comprend le capteur UWB (110') avec le module de commande (125) correspondant.
